# EUROPEAN PATENT APPLICATION

(11) **EP 4 618 167 A1**
(43) Date of publication of application: **17.09.2025**
(21) Application number: 23938727.7
(22) Date of filing: 26.05.2023
(51) Int. Cl.: H01M 4/04, H01M 4/50, H01M 10/0525

(54) **LITHIUM-SODIUM COMPOSITE MANGANESE-BASED MATERIAL AND PREPARATION METHOD THEREFOR, POSITIVE ELECTRODE SHEET, SECONDARY BATTERY, AND ELECTRICAL DEVICE**

(71) Applicant: Contemporary Amperex Technology Co., Limited, Ningde, Fujian 352100 (CN)
(72) Inventor: SHEN, Chongheng, Ningde, Fujian 352100 (CN); ZHAO, Dong, Ningde, Fujian 352100 (CN); WU, Changxu, Ningde, Fujian 352100 (CN); HUAN, Shuxing, Ningde, Fujian 352100 (CN); WANG, Bangrun, Ningde, Fujian 352100 (CN); LIU, Na, Ningde, Fujian 352100 (CN)
(74) Representative: von Tietzen und Hennig, Nikolaus
(86) International application number: PCT/CN2023/096487
(87) International publication number: WO 2024/243727

(57) **Abstract**

The present application relates to the field of battery technologies, and specifically to a lithium-sodium composite manganese-based material and a preparation method thereof, a positive electrode plate, a secondary battery, and an electric apparatus. The lithium-sodium composite manganese-based material includes LiₜNa_{y}[LiₓNiₐCo_{b}Mn_{c}M_{d}]AₚO_{q}, where 0<y≤0.2, 0.68≤t+y≤1, x+a+b+c+d=1, x>0, a≥0.17, 0≤b<0.1, c≥0.4, 0≤d<0.04, 0≤p≤0.1, 0<q≤2; M includes one or more of V, Nb, Ta, Cr, Mo, B, Al, Ti, Zr, Mg, Ce, Fe, W, or Sn, and A includes one or more of F, S, N, or Cl. The lithium-sodium composite manganese-based material of the present application exhibits high initial efficiency and specific capacity, with good cycling performance and low gas evolution.

## Description

### TECHNICAL FIELD

The present application relates to the field of battery technologies, and specifically to a lithium-sodium composite manganese-based material and a preparation method thereof, a positive electrode plate, a secondary battery, and an electric apparatus.

### BACKGROUND

A positive electrode material constitutes a critical component of a battery, affecting performance of the battery such as capacity and cycle stability. In lithium-ion batteries, common positive electrode materials include lithium iron phosphate, lithium cobalt oxide, nickel-cobalt-manganese ternary materials, nickel-cobalt-aluminum ternary materials, and the like.

Among currently known positive electrode materials, lithium-rich manganese-based positive electrode materials have garnered significant attention due to high discharge specific capacity. However, existing lithium-rich manganese-based positive electrode materials generally exhibit issues such as low initial efficiency (first-cycle coulombic efficiency), low specific capacity, poor cycling performance, and high gas evolution, restricting their development.

### SUMMARY

In view of the above issues, the present application provides a lithium-sodium composite manganese-based material and a preparation method thereof, a positive electrode plate, a secondary battery, and an electric apparatus, capable of addressing technical issues of lithium-sodium composite manganese-based materials, such as low initial efficiency, low specific capacity, poor cycling performance, and high gas evolution.

According to a first aspect, the present application provides a lithium-sodium composite manganese-based material, where the lithium-sodium composite manganese-based material includes LiₜNa_{y}[LiₓNiₐCo_{b}Mn_{c}M_{d}]AₚO_{q}, where 0<y<0.2, 0.68≤t+y≤1, x+a+b+c+d=1, x>0, a≥0.17, 0≤b<0.1, c≥0.4, 0<d<0.04, 0≤p≤0.1, 0<q≤2, M includes one or more of V, Nb, Ta, Cr, Mo, B, Al, Ti, Zr, Mg, Ce, Fe, W, or Sn, and A includes one or more of F, S, N, or Cl.

In the lithium-sodium composite manganese-based material of the present application, Na element is doped at Li sites with partial occupancy, and in addition to Ni and Co, an M element is doped at Mn sites, while an A element is doped at oxygen sites. A structure formed by Na element with transition metal elements such as Ni, Co, and Mn contains numerous vacant active sites capable of accommodating Li, and an increase in Li active sites benefits the initial efficiency and specific capacity. Therefore, for low-cobalt, manganese-rich positive electrode materials, the first-cycle coulombic efficiency and specific capacity can be significantly improved. Due to significant volume and stress changes accompanying Li/Na element deintercalation and intercalation, in this application, doping M elements, such as V, with high valence or large ionic radii, into the bulk phase as pinning points can stabilize the lattice after significant Li/Na element deintercalation; and doping A elements such as F in the bulk phase can stabilize bonding between transition metals such as Ni, Co, and Mn and oxygen, mitigating substantial oxygen release caused by anionic redox reactions in manganese-rich materials at high voltages, thereby suppressing gas evolution. In summary, the lithium-sodium composite manganese-based material of the present application can improve the initial efficiency and specific capacity through a Na phase with abundant active sites in an appropriate proportion, and enhance structural stability during electrochemical processes through cationic M and anionic A doping, leading to improved cycling performance and suppressed gas evolution.

In some embodiments, 0<y<0.1. In the lithium-sodium composite manganese-based material of the present application, a doping amount of Na does not exceed 20% of a total Li molar amount, that is, 0<y≤0.2, optionally 0<y≤0.1. A doping amount of Na exceeding 20% of a total Li molar amount surpasses a sodium ion throughput limit that a graphite negative electrode in a conventional lithium-ion battery chemical system can withstand. Therefore, setting a doping amount of Na within an appropriate range can satisfy a throughput limit of a negative electrode in a conventional lithium-ion battery.

In some embodiments, a mass percentage of Na element in the lithium-sodium composite manganese-based material is less than or equal to 6%; optionally, the mass percentage is greater than or equal to 0.3% and less than or equal to 2%.

In some embodiments, a specific surface area of the lithium-sodium composite manganese-based material is 0.3-12 m²/g; optionally 0.4-10 m²/g; optionally 0.5-5.5 m²/g. An appropriate specific surface area range helps achieve high specific capacity, first-cycle coulombic efficiency, and cycle life, as well as low gas evolution.

In some embodiments, a mass fraction of alkaline substances in the lithium-sodium composite manganese-based material is 250-3000 ppm; optionally 300-3000 ppm; optionally 300-2000 ppm. A mass fraction of alkaline substances is also referred to as residual alkali content. The residual alkali content significantly affects performance of a positive electrode material and a battery preparation process. The lithium-sodium composite manganese-based material of the present application has an appropriate residual alkali content, helping achieve low internal resistance, high specific capacity, and ensuring processability of a positive electrode slurry.

In some embodiments, an X-ray diffraction pattern of the lithium-sodium composite manganese-based material includes a (101) crystal plane diffraction peak at a 2θ angle of 36.5±0.5° and a (102) crystal plane diffraction peak at a 20 angle of 38.4±0.5°, where the (101) crystal plane diffraction peak and the (102) crystal plane diffraction peak satisfy: (I₁₀₁/I₁₀₂)^{0.5}≥1.96, where I₁₀₁ represents a peak area of the (101) crystal plane diffraction peak, and I₁₀₂ represents a peak area of the (102) crystal plane diffraction peak; optionally, (I₁₀₁/I₁₀₂)^{0.5}≥2. Oxygen defects constitute a significant factor affecting positive electrode material performance, referring to the departure of oxygen atoms (oxygen ions) from the lattice, resulting in oxygen vacancies, that is, defects left by oxygen atoms (oxygen ions) escaping from the lattice. Oxygen defects constitute a significant factor affecting positive electrode material performance, referring to the departure of oxygen atoms (oxygen ions) from the lattice, resulting in oxygen vacancies, that is, defects left by oxygen atoms (oxygen ions) escaping from the lattice. For the lithium-sodium composite manganese-based material of the present application, a (101) crystal plane has no contribution to oxygen defects, while a (102) crystal plane has a negative contribution to oxygen defects. Therefore, a peak area ratio of diffraction peaks of the two crystal planes can reflect the oxygen defect content and the presence of oxygen defects in the lithium-sodium composite manganese-based material. In the present application, (I₁₀₁/I₁₀₂)^{0.5}≥1.96 helps form a lithium-sodium composite manganese-based material with low oxygen defects, thereby improving the specific capacity, initial efficiency, cycling performance, and gas evolution of the lithium-sodium composite manganese-based material.

In some embodiments, an X-ray diffraction pattern of the lithium-sodium composite manganese-based material includes a (002) crystal plane diffraction peak at a 2θ angle of 16.0±0.8° and a (003) crystal plane diffraction peak at a 2θ angle of 18.6±0.6°, where the (002) crystal plane diffraction peak and the (003) crystal plane diffraction peak satisfy: 0≤(I₀₀₂I₀₀₃)≤0.4, where I₀₀₂ represents a peak area of the (002) crystal plane diffraction peak, and I₀₀₃ represents a peak area of the (003) crystal plane diffraction peak; optionally, 0.01≤(I₀₀₂/I₀₀₃)≤0.4. The (002) and (003) crystal planes are related to Na content. An appropriate (I₀₀₂/I₀₀₃) range helps form a lithium-sodium composite manganese-based material with an appropriate proportion of Na-containing phases.

In some embodiments, a median particle size Dv50 of the lithium-sodium composite manganese-based material is 2-15 µm; optionally 3-10 µm. The lithium-sodium composite manganese-based material of the present application has an appropriate median particle size, facilitating formation of an appropriate specific surface area, and a micron-scale median particle size has low preparation process requirements, helping to control costs.

In some embodiments, a range of a particle size distribution span SPAN=[(Dv90-Dv10)/Dv50] of the lithium-sodium composite manganese-based material is 0.5≤SPAN≤2; optionally, 0.5≤SPAN≤1.8; and optionally, 0.8≤SPAN≤1.4. Particle size distribution significantly affects processing of a positive electrode material, and the SPAN range of the present application helps achieve a high electrode plate compacted density.

In some embodiments, (t+x)/(a+b+c)=0.9-1.4, optionally (t+x)/(a+b+c)=1.3-1.4. The (t+x)/(a+b+c) represents a molar ratio of Li, Ni, Co, and Mn in the lithium-sodium composite manganese-based material. An appropriate ratio of Li, Ni, Co, and Mn helps cation mixing in the lithium-sodium composite manganese-based material, improving cycling performance.

According to a second aspect, the present application provides a preparation method of a lithium-sodium composite manganese-based material, including:
mixing raw materials and performing a first sintering treatment; where the raw materials include a lithium source, a sodium source, a nickel source, and a manganese source, and optionally further include a cobalt source, an M source, and an A source;
where the lithium-sodium composite manganese-based material includes LiₜNa_{y}[LiₓNiₐCo_{b}Mn_{c}M_{d}]AₚO_{q}, 0<y<0.2, 0.68≤t+y≤1, x+a+b+c+d=1, x>0, a≥0.17, 0<b<0.1, c≥0.4, 0≤d<0.04, 0≤p≤0.1, 0<q≤2, M includes one or more of V, Nb, Ta, Cr, Mo, B, Al, Ti, Zr, Mg, Ce, Fe, W, or Sn, and A includes one or more of F, S, N, or Cl.

In the preparation method of the present application, raw materials are first mixed and subjected to a first sintering treatment, which allows Na element to be doped at lithium sites, M element to be doped at manganese sites, and A element to be doped at oxygen sites, simultaneously achieving doping of Na, M, and A. The lithium-sodium composite manganese-based material prepared by this method exhibits high specific capacity, high first-cycle coulombic efficiency, and good cycling performance, with effectively suppressed gas evolution. In addition, the preparation method of the present application is simple to operate, suitable for mass production, cost-effective, and highly efficient.

In some embodiments, conditions of the first sintering treatment include one or more of the following (1) to (4):
(1) A temperature range of 700-1100°C of the first sintering treatment, optionally 750-1000°C;
(2) Heating to a temperature of the first sintering treatment at a rate of 2-10°C/min;
(3) Holding at the temperature of the first sintering treatment for 10-20 h;
(4) An oxygen-containing atmosphere.

Appropriate sintering treatment conditions facilitate formation of a composite oxide material with high crystallinity and good doping effects from a lithium source, a sodium source, a nickel source, a cobalt source, a manganese source, an M source, and an A source. The lithium-sodium composite manganese-based material prepared exhibits high specific capacity, high initial coulombic efficiency, good cycling performance, and significantly suppressed gas evolution.

In some embodiments, conditions of the first sintering treatment include one or more of the following (1) to (4):
(1) A temperature range of 780-990°C of the first sintering treatment;
(2) Heating to a temperature of the first sintering treatment at a rate of 2-5°C/min;
(3) Holding at the temperature of the first sintering treatment for 10-15 h;
(4) An oxygen-containing atmosphere, where a volume percentage of oxygen in the oxygen-containing atmosphere is 20%-99.99%.

In some embodiments, the preparation method of the lithium-sodium composite manganese-based material further includes a washing treatment step for a product of the first sintering treatment.

After the first sintering treatment, alkaline substances such as sodium hydroxide, lithium hydroxide, sodium carbonate, and lithium carbonate often remain, and a residual alkali content significantly affects performance of a positive electrode material and a battery preparation process. Performing a washing treatment step after the first sintering treatment can adjust a residual alkali content of the lithium-sodium composite manganese-based material, helping achieve low internal resistance, high specific capacity, and ensuring processability of a positive electrode slurry.

In some embodiments, the washing treatment step includes: washing the product of the first sintering treatment with a washing liquid; optionally, a pH range of the washing liquid is 1.5-7, optionally 2-7, and optionally 2.5-7. Treating a product of the first sintering treatment with an acidic or neutral washing liquid can result in an acid-base neutralization reaction or cleaning and dilution to adjust a residual alkali concentration of the product of the first sintering treatment, obtaining an appropriate residual alkali content, helping achieve low internal resistance, high specific capacity, and ensuring processability of a positive electrode slurry.

In some embodiments, a solid-liquid ratio of the product of the first sintering treatment to the washing liquid is 1/35-1/6 g/mL; optionally 1/20-1/10 g/mL. An appropriate solid-liquid ratio enables repeated washing treatment of the product of the first sintering, adjusting the residual alkali content of the material.

In some embodiments, a duration of the washing treatment is 0.2-10 h; optionally 0.25-4 h.

In some embodiments, the washing treatment includes a stirring step, where a stirring rate is 800-1200 r/min, optionally 900-1000 r/min. Appropriate washing treatment conditions enable repeated washing treatment of the product of the first sintering, adjusting the residual alkali content of the material.

In some embodiments, the washing liquid includes water and one or more acid solutions; optionally, the acid solution includes a solution of any one or more of hydrochloric acid, sulfuric acid, nitric acid, acetic acid, citric acid, ammonium citrate, phosphoric acid, ammonium chloride, or ammonium sulfate. Such acids or acidic salts can form an acid solution, performing acid-base neutralization on the product of the first sintering treatment, while avoiding introduction of impurity ions into the lithium-sodium composite manganese-based material.

In some embodiments, the preparation method of the lithium-sodium composite manganese-based material further includes a second sintering treatment step for the product of the first sintering treatment. Performing the second sintering treatment improves the crystallinity and reduces the oxygen defects of the lithium-sodium composite manganese-based material, thereby facilitating improvement of specific capacity, initial efficiency, cycling performance, and suppression of gas evolution for the lithium-sodium composite manganese-based material. In some embodiments, when a first sintering treatment step is followed by both a washing treatment step and a second sintering treatment step, the second sintering treatment step may be performed after the washing treatment step.

In some embodiments, conditions of the second sintering treatment include one or more of the following (i) to (iv):
(i) A temperature range of 300-700°C of the second sintering treatment, optionally 300-600°C;
(ii) Heating to a temperature of the second sintering treatment at a rate of 2-10°C/min;
(iii) Holding at the temperature of the second sintering treatment for 5-20 h;
(iv) An oxygen-containing atmosphere.

Performing the second sintering treatment under appropriate conditions improves the crystallinity and reduces the oxygen defects of the lithium-sodium composite manganese-based material, thereby facilitating improvement of specific capacity, first-cycle coulombic efficiency, cycling performance, and suppression of gas evolution for the lithium-sodium composite manganese-based material.

Conditions of the second sintering treatment include one or more of the following (i) to (iv):
(i) A temperature range of 400-550°C of the second sintering treatment;
(ii) Heating to a temperature of the second sintering treatment at a rate of 2-5°C/min;
(iii) Holding at the temperature of the second sintering treatment for 8-12 h;
(iv) An oxygen-containing atmosphere, where a volume percentage of oxygen in the oxygen-containing atmosphere is 20%-99.99%.

According to a third aspect, the present application provides a positive electrode plate, where the positive electrode plate includes the lithium-sodium composite manganese-based material as described above, or includes a lithium-sodium composite manganese-based material prepared by the method as described above.

The lithium-sodium composite manganese-based material of the present application can serve as an active substance of a positive electrode plate, helping achieve high battery capacity, first-cycle coulombic efficiency, and cycling performance, and suppressing battery gas evolution.

According to a fourth aspect, the present application provides a secondary battery, where the secondary battery includes the positive electrode plate as described above.

Applying a positive electrode plate containing the lithium-sodium composite manganese-based material of the present application to a secondary battery results in a secondary battery with high capacity, first-cycle coulombic efficiency, and cycling performance, and low gas evolution.

According to a fifth aspect, the present application further provides an electric apparatus, where the electric apparatus includes the secondary battery as described above.

The secondary battery disclosed in the embodiments of the present application can be used in an electric apparatus using a battery as a power source, or in various energy storage systems using a battery as an energy storage element. The electric apparatus may include but is not limited to a mobile phone, a tablet, a notebook computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### DESCRIPTION OF EMBODIMENTS

The following describes in detail embodiments of technical solutions of this application with reference to the accompanying drawings. The following embodiments are merely intended for a clearer description of technical solutions of the present application and therefore are used as examples which do not constitute limitations on a protection scope of the present application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments in this application, "multiple" means at least two unless otherwise specifically stated.

In this specification, reference to "embodiment" means that specific features, structures, or characteristics described with reference to an embodiment may be incorporated in at least one embodiment of the present application. Appearance of this phrase in various places in the specification does not necessarily refer to a same embodiment, nor is it an independent or alternative embodiment mutually exclusive with other embodiments. Persons skilled in a technical field explicitly and implicitly understand that embodiments described herein may be combined with other embodiments.

In descriptions of embodiments of the present application, the term "and/or" is only an associative relationship for describing associated objects, indicating that three relationships may be present. For example, A and/or B may indicate the following three cases: presence of A only, presence of both A and B, and presence of B only. Additionally, a character "/" herein generally indicates an "or" relationship between associated objects before and after.

In descriptions of embodiments of the present application, the term "at least one" refers to one or more, and "multiple" refers to two or more. "At least one of the following" or similar expressions refer to any combination of these items, including any combination of single or plural items. For example, "at least one of a, b, or c" or "at least one of a, b, and c" may represent: a, b, c, a-b (that is, a and b), a-c, b-c, or a-b-c, where a, b, and c may each be single or multiple.

It should be understood that in various embodiments of the present application, a sequence number of each process does not imply an execution order, and some or all steps may be executed in parallel or sequentially. An execution order of each process should be determined by function and internal logic of the process, and should not constitute any limitation on an implementation process of the embodiments of the present application.

The masses of the relevant components mentioned in the specification of the embodiments of the present application may not only refer to a specific content of each component, but also represent a mass proportion relationship between the components. Therefore, scaling up or down a content of related components according to the specification of embodiments of the present application proportionally is within a scope disclosed by the specification of embodiments of the present application. Specifically, a mass described in the specification of embodiments of the present application may be a mass unit known in a chemical field, such as µg, mg, g, or kg.

Due to high capacity, long lifespan, and environmental friendliness, lithium-ion batteries are widely used as secondary energy storage devices in fields such as consumer electronics, electric vehicles, and electric bicycles. With continuous societal progress and technological development, higher requirements have been placed on secondary energy storage devices represented by lithium-ion batteries, demanding higher capacity, longer lifespan, and higher safety. A key factor in achieving these requirements lies in the positive electrode material.

Currently known positive electrode materials include lithium cobalt oxide, lithium iron phosphate, nickel-cobalt-manganese or nickel-cobalt-aluminum ternary positive electrode materials, and lithium-rich manganese-based layered oxide positive electrode materials (lithium-rich manganese-based positive electrode materials), which are either commercially applied or still in experimental research and development stages. Among them, lithium-rich manganese-based positive electrode materials have garnered significant attention due to extremely high theoretical specific capacity and reversible capacity.

Phases in lithium-rich manganese-based materials are relatively complex, and no definitive conclusion has been reached, but a prevailing view considers them to primarily contain different lithium-manganese oxide phases. During initial charging, a portion of lithium-manganese oxide phases in lithium-rich manganese-based materials is activated, leading to irreversible lithium ion removal and oxygen release, and during battery cycling, cation rearrangement and structural transformation occur, resulting in low initial efficiency and capacity decay, accompanied by relatively severe gas evolution issues. To address these technical issues, related technologies enhance lithium ion diffusion channels by forming layered oxides in lithium-rich manganese-based positive electrode materials, thereby improving the initial efficiency, cycling performance, and rate performance of the positive electrode material. Alternatively, adjusting a content of specific crystal planes in lithium-rich manganese-based positive electrode materials improves the capacity and cycling performance of the positive electrode material. Moreover, further studies have focused on morphology engineering of lithium-rich manganese-based positive electrode materials, such as designing them into nanorods, nanowires, nanotubes, or nanosheets. These structures can shorten diffusion paths for electrons and lithium ions, contributing to improving the capacity and cycling performance of the material. In other related technologies, lattice parameters are adjusted by doping metal elements such as Ni and Co at manganese sites, improving the initial efficiency, capacity, and cycling performance of the positive electrode material. However, in practice, such technologies generally achieve limited improvements in the initial efficiency, specific capacity, and cycling performance of the positive electrode material, while inevitably failing to mitigate irreversible oxygen release, thus unable to suppress gas evolution of the positive electrode material.

The initial efficiency and specific capacity of lithium-rich manganese-based positive electrode materials correlate with a content of lithium ions available for deintercalation and intercalation, the cycling performance of lithium-rich manganese-based positive electrode materials is affected by reversibility of lithium ion deintercalation and intercalation; and oxygen release behavior relates to gas evolution issues. Accordingly, doping specific elements in lithium-rich manganese-based positive electrode materials, specifically Na doping is introduced at some lithium sites in the lattice of lithium-rich manganese-based positive electrode materials. A structure formed by Na element with transition metal elements such as Ni, Co, and Mn contains numerous vacant active sites capable of accommodating Li, facilitating reversible lithium ion deintercalation and intercalation, thereby improving the initial efficiency and specific capacity. In addition, due to significant volume and stress changes accompanying Na element deintercalation and intercalation, doping metal elements with high-valence or large ionic radii into the bulk phase can serve as the pinning effect to stabilize the lattice after significant Li/Na deintercalation, enhancing the lattice stability during cycling, thereby improving the cycling performance of the positive electrode material. Furthermore, doping anions at oxygen sites can stabilize bonding between transition metals such as Ni, Co, and Mn and oxygen, mitigating substantial oxygen release caused by anionic redox reactions in manganese-rich materials at high voltages, thereby suppressing gas evolution of the material.

Thus, by simultaneously doping Na element at lithium sites, doping metal elements with appropriate high-valence or large ionic radii at manganese sites, and doping anions at oxygen sites, a novel lithium-sodium composite manganese-based material is formed, significantly improving the initial efficiency, specific capacity, and cycling performance of the material, while suppressing oxygen release behavior and reducing gas evolution.

The lithium-sodium composite manganese-based material disclosed in the embodiments of the present application can be used in a positive electrode plate, where the lithium-sodium composite manganese-based material as an active substance can form an active layer of the positive electrode plate alone or together with other positive electrode materials, and upon combination with a certain current collector, forms the positive electrode plate. Such a positive electrode plate can be used in a secondary battery, further applied to various electric apparatuses using the secondary battery as a power source.

The following further describes this application with reference to embodiments. It should be understood that these embodiments are merely used to describe this application but not to limit the scope of this application.

An embodiment of the present application provides a lithium-sodium composite manganese-based material. The lithium-sodium composite manganese-based material of embodiments of the present application includes LitNa_{y}[LiₓNiₐCo_{b}Mn_{c}M_{d}]AₚO_{q}, where 0<y≤0.2, 0.68≤t+y≤1, x+a+b+c+d=1, x>0, a≥0.17, 0≤b<0.1, c≥0.4, 0<d<0.04, 0≤p≤0.1, 0<q≤2, M includes one or more of V, Nb, Ta, Cr, Mo, B, Al, Ti, Zr, Mg, Ce, Fe, W, or Sn, and A includes one or more of F, S, N, or Cl.

In the lithium-sodium composite manganese-based material of embodiments of the present application, Na element is doped at Li sites with partial occupancy, and in addition to Ni and Co, an M element is doped at Mn sites, while an A element is doped at oxygen sites. A structure formed by Na element with transition metal elements such as Ni, Co, and Mn contains numerous vacant active sites capable of accommodating Li, and an increase in Li active sites benefits the initial efficiency and specific capacity. Therefore, for low-cobalt, manganese-rich positive electrode materials, the initial efficiency and specific capacity can be significantly improved. Due to significant volume and stress changes accompanying Li/Na element deintercalation and intercalation, in the embodiments of the present application, M elements, such as V, with high valence or large ionic radii, are doped into the bulk phase as pinning points, which can stabilize the lattice after significant Li/Na deintercalation, enhancing lattice stability during cycling, thereby improving cycling performance of the positive electrode material; and doping A elements such as F in the bulk phase can stabilizes bonding between transition metals such as Ni, Co, and Mn and oxygen, mitigating substantial oxygen release caused by anionic redox reactions in manganese-rich materials at high voltages, thereby suppressing gas evolution. In summary, the lithium-sodium composite manganese-based material of the embodiments of the present application can improve the initial efficiency and specific capacity through a Na phase with abundant active sites in an appropriate proportion, and enhance structural stability during electrochemical processes through cationic M and anionic A doping, leading to improved cycling performance and suppressed gas evolution.

In some embodiments, 0<y<0.1. In the lithium-sodium composite manganese-based material of the embodiments of the present application, a doping amount of Na does not exceed 20% of a total Li molar amount, that is, 0<y≤0.2, optionally 0<y<0.1, including but not limited to a point value of any one of 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, or a range value between any two thereof. A doping amount of Na exceeding 20% of a total Li molar amount surpasses a sodium ion throughput limit that a graphite negative electrode in a conventional lithium-ion battery chemical system can withstand. Therefore, setting a doping amount of Na within an appropriate range can satisfy a throughput limit of a negative electrode in a conventional lithium-ion battery.

In some embodiments, a mass percentage of Na element in the lithium-sodium composite manganese-based material is greater than 0% and less than or equal to 6%; in other embodiments, a mass percentage of Na element is greater than or equal to 0.3% and less than or equal to 2%. For example, a mass percentage of Na element in the lithium-sodium composite manganese-based material includes but is not limited to a point value of any one of 0.01%, 0.02%, 0.03%, 0.04%, 0.05%, 0.06%, 0.07%, 0.08%, 0.09%, 0.1%, 0.12%, 0.14%, 0.16%, 0.18%, 0.2%, 0.22%, 0.24%, 0.26%, 0.28%, 0.3%, 0.32%, 0.34%, 0.36%, 0.38%, 0.4%, 0.42%, 0.44%, 0.46%, 0.5%, 0.52%, 0.54%, 0.56%, 0.58%, 0.6%, or a range value between any two thereof. A mass percentage of Na element in the lithium-sodium composite manganese-based material can be analyzed and obtained by inductively coupled plasma atomic emission spectroscopy.

In some embodiments, 0<x<0.16. For example, x includes but is not limited to a point value of any one of 0.01, 0.02, 0.03, 0.04, 0.05, 0.06, 0.07, 0.08, 0.09, 0.1, 0.11, 0.12, 0.13, 0.14, 0.15, 0.16, or a range value between any two thereof.

In some embodiments, t+y includes but is not limited to a point value of any one of 0.68, 0.7, 0.72, 0.74, 0.76, 0.78, 0.8, 0.82, 0.84, 0.86, 0.88, 0.9, 0.92, 0.94, 0.96, 0.98, 1, or a range value between any two thereof.

In some embodiments, a includes but is not limited to a point value of any one of 0.17, 0.18, 0.2, 0.22, 0.24, 0.26, 0.28, 0.3, 0.32, 0.34, 0.36, 0.38, 4, or a range value between any two thereof.

In some embodiments, b includes but is not limited to a point value of any one of 0, 0.01, 0.02, 0.03, 0.04, 0.05, 0.06, 0.07, 0.08, 0.09, or a range value between any two thereof.

In some embodiments, c includes but is not limited to a point value of any one of 0.4, 0.42, 0.44, 0.46, 0.48, 0.5, 0.52, 0.54, 0.56, 0.58, 0.6, or a range value between any two thereof.

In some embodiments, d includes but is not limited to a point value of any one of 0, 0.001, 0.002, 0.004, 0.006, 0.008, 0.01, 0.015, 0.02, 0.025, 0.03, 0.035, or a range value between any two thereof.

In some embodiments, p includes but is not limited to a point value of any one of 0, 0.001, 0.002, 0.004, 0.006, 0.008, 0.01, 0.015, 0.02, 0.025, 0.03, 0.035, 0.04, 0.05, 0.06, 0.07, 0.08, 0.09, 0.1, or a range value between any two thereof.

In some embodiments, q includes but is not limited to a point value of any one of 0.1, 0.2, 0.4, 0.6, 0.8, 1, 1.2, 1.4, 1.6, 1.8, 2, or a range value between any two thereof.

In some embodiments, a specific surface area of the lithium-sodium composite manganese-based material is 0.2-12 m²/g, in other embodiments, a specific surface area of the lithium-sodium composite manganese-based material is 0.4-10 m²/g, optionally 0.5-5.5 m²/g. For example, a specific surface area of the lithium-sodium composite manganese-based material includes but is not limited to a point value of any one of 0.2 m²/g, 0.4 m²/g, 0.5 m²/g, 0.6 m²/g, 0.7 m²/g, 0.8 m²/g, 0.9 m²/g, 1 m²/g, 1.2 m²/g, 1.4 m²/g, 1.6 m²/g, 1.8 m²/g, 2 m²/g, 2.2 m²/g, 2.4 m²/g, 2.6 m²/g, 2.8 m²/g, 3 m²/g, 3.2 m²/g, 3.4 m²/g, 3.6 m²/g, 3.8 m²/g, 4 m²/g, 4.2 m²/g, 4.4 m²/g, 4.6 m²/g, 4.8 m²/g, 5 m²/g, 5.2 m²/g, 5.4 m²/g, 5.5 m²/g, 5.6 m²/g, 5.8 m²/g, 6 m²/g, 6.2 m²/g, 6.4 m²/g, 6.6 m²/g, 6.8 m²/g, 7 m²/g, 7.2 m²/g, 7.4 m²/g, 7.6 m²/g, 7.8 m²/g, 8 m²/g, 8.2 m²/g, 8.4 m²/g, 8.6 m²/g, 9 m²/g, 9.2 m²/g, 9.4 m²/g, 9.6 m²/g, 9.8 m²/g, 10 m²/g, 10.5 m²/g, 11 m²/g, 11.5 m²/g, 12 m²/g, or a range value between any two thereof. A specific surface area can be determined by a nitrogen adsorption specific surface area analysis method in accordance with GB/T 19587-2017 "Determination of Specific Surface Area of Solid Materials by Gas Adsorption BET Method." An appropriate specific surface area range helps achieve high specific capacity, first-cycle coulombic efficiency, and cycle life, as well as low gas evolution.

In some embodiments, a mass fraction of alkaline substances in the lithium-sodium composite manganese-based material is 250-3000 ppm; in other embodiments, a mass fraction of alkaline substances in the lithium-sodium composite manganese-based material is 300-3000 ppm, optionally 300-2000 ppm. For example, a mass fraction of alkaline substances in the lithium-sodium composite manganese-based material includes but is not limited to a point value of any one of 250 ppm, 300 ppm, 350 ppm, 400 ppm, 450 ppm, 500 ppm, 550 ppm, 600 ppm, 650 ppm, 700 ppm, 750 ppm, 800 ppm, 850 ppm, 900 ppm, 950 ppm, 1000 ppm, 1100 ppm, 1200 ppm, 1300 ppm, 1400 ppm, 1500 ppm, 1600 ppm, 1700 ppm, 1800 ppm, 1900 ppm, 2000 ppm, 2100 ppm, 2200 ppm, 2300 ppm, 2400 ppm, 2500 ppm, 2600 ppm, 2700 ppm, 2800 ppm, 2900 ppm, 3000 ppm, or a range value between any two thereof. In embodiments of the present application, alkaline substances in the lithium-sodium composite manganese-based material, also referred to as residual alkali, mainly include alkaline substances such as lithium hydroxide, lithium carbonate, sodium hydroxide, and sodium carbonate, primarily originating from unreacted lithium sources or sodium sources during a sintering preparation process of the lithium-sodium composite manganese-based material, or from decomposition during sintering that produces these alkaline substances. Specifically, common lithium sources used for synthesizing positive electrode materials for lithium batteries include lithium hydroxide, lithium carbonate, and the like, and a higher lithium ratio is often adopted during preparation, resulting in residual alkali in forms such as lithium hydroxide and lithium carbonate. In addition, the lithium-sodium composite manganese-based material of the embodiments of the present application includes sodium doping, and residues may also occur during doping using a sodium source, forming residual alkali such as sodium hydroxide and sodium carbonate. In addition, during preparation, alkali may also precipitate within a material. The mass fraction of alkaline substances, also referred to as residual alkali content, can be determined according to GB/T 9736-2008 "General Method for the Determination of Acidity and Alkalinity of Chemical Reagents," using a hydrochloric acid standard solution for titration. The residual alkali content significantly affects performance of a positive electrode material and a battery preparation process. The lithium-sodium composite manganese-based material of the embodiments of the present application has an appropriate residual alkali content, helping achieve low internal resistance, high specific capacity, and ensuring processability of a positive electrode slurry.

In some embodiments, an X-ray diffraction pattern of the lithium-sodium composite manganese-based material includes a (101) crystal plane diffraction peak at a 2θ angle of 36.5±0.5° and a (102) crystal plane diffraction peak at a 2θ angle of 38.4±0.5°, where the (101) crystal plane diffraction peak and the (102) crystal plane diffraction peak satisfy: (I₁₀₁/I₁₀₂)^{0.5}≥1.96, where I₁₀₁ represents a peak area of the (101) crystal plane diffraction peak, and I₁₀₂ represents a peak area of the (102) crystal plane diffraction peak, in other embodiments, (I₁₀₁/I₁₀₂)^{0.5}≥2. For example, (I₁₀₁/I₁₀₂)^{0.5} includes but is not limited to a point value of any one of 1.96, 1.97, 1.98, 1.99, 2, 2.01, 2.02, 2.03, 2.04, 2.05, 2.06, 2.08, 2.09, 3, or a range value between any two thereof.

In X-ray diffraction technology, incident X-ray photons interact with electrons of atoms in a sample, forming a diffraction phenomenon, and this diffraction phenomenon is used to obtain characteristics of diffracted X-ray signals, which are processed to produce an X-ray diffraction pattern (XRD pattern). Diffraction peaks in the XRD pattern are generated by constructive interference of monochromatic X-ray beams diffracted at specific angles from each set of lattice planes (crystal planes) in a sample, thus, diffraction peaks in an XRD pattern correspond to crystal planes of a sample. Furthermore, each diffraction peak in an XRD pattern satisfies the Bragg equation: 2dsinθ=nλ, where θ is an incident angle, d is a crystal plane spacing, n is a diffraction order, λ is an incident wavelength, and 2θ is a diffraction angle. In an XRD pattern, a peak area of a diffraction peak refers to a total area of a portion of the diffraction peak above a background line, representing an integrated intensity. The integrated intensity of a diffraction peak of a certain phase is proportional to a percentage content of that phase in a sample. Therefore, the integrated intensity of a diffraction peak directly reflects a percentage of aa phase in a compound. In practice, a peak area of a diffraction peak is typically calculated and obtained directly by XRD analysis software, such as a "calculate peak area" function in MDI JADE software.

Oxygen defects constitute a significant factor affecting positive electrode material performance, referring to the departure of oxygen atoms (oxygen ions) from the lattice, resulting in oxygen vacancies, that is, defects left by oxygen atoms (oxygen ions) escaping from the lattice. Oxygen defects significantly affect material performance, such as charge-discharge capacity, cycling performance, and rate performance of a positive electrode material.

For the lithium-sodium composite manganese-based material of embodiments of the present application, a (101) crystal plane has no contribution to oxygen defects, while a (102) crystal plane has a negative contribution to oxygen defects. Therefore, a peak area ratio of diffraction peaks of the two crystal planes can reflect the oxygen defect content and the presence of oxygen defects in the lithium-sodium composite manganese-based material. In the embodiments of the present application, (I₁₀₁/I₁₀₂)^{0.5}≥1.96 helps form a lithium-sodium composite manganese-based material with low oxygen defects, thereby improving the specific capacity, initial efficiency, cycling performance, and gas evolution of the lithium-sodium composite manganese-based material.

In some embodiments, an X-ray diffraction pattern of the lithium-sodium composite manganese-based material includes a (002) crystal plane diffraction peak at a 2θ angle of 16.0±0.8° and a (003) crystal plane diffraction peak at a 2θ angle of 18.6±0.6°, where the (002) crystal plane diffraction peak and the (003) crystal plane diffraction peak satisfy: 0≤(I₀₀₂/I₀₀₃)≤0.4, where I₀₀₂ represents a peak area of the (002) crystal plane diffraction peak, and I₀₀₃ represents a peak area of the (003) crystal plane diffraction peak; in other embodiments, 0.01≤(I₀₀₂/I₀₀₃)≤0.4. For example, (I₀₀₂/I₀₀₃) includes but is not limited to a point value of any one of 0, 0.01, 0.02, 0.03, 0.04, 0.05, 0.06, 0.07, 0.08, 0.09, 0.1, 0.12, 0.14, 0.16, 0.18, 0.2, 0.22, 0.24, 0.26, 0.28, 0.3, 0.32, 0.34, 0.36, 0.38, 0.4, or a range value between any two thereof. The (002) and (003) crystal planes are related to Na content, and an appropriate (I₀₀₂/I₀₀₃) range helps form a lithium-sodium composite manganese-based material with an appropriate proportion of Na-containing phases.

In some embodiments, a median particle size Dv50 of the lithium-sodium composite manganese-based material is 2-15 µm; in other embodiments, a median particle size Dv50 of the lithium-sodium composite manganese-based material is 3-10 µm. For example, a median particle size Dv50 of the lithium-sodium composite manganese-based material includes but is not limited to a point value of any one of 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, or a range value between any two thereof. Dv50, namely a median particle size, refers to a particle size at which a cumulative distribution of particles is 50%, indicating that 50% of particles have a diameter greater than this value, and 50% of particles have a diameter less than this value. A Dv50 of particles can be determined in accordance with GB/T 19077-2016/ISO 13320:2009 "Particle Size Distribution Laser Diffraction Method." In the embodiments of the present application, a particle morphology of the lithium-sodium composite manganese-based material may be a regular spherical shape, an ellipsoidal shape, a polygonal shape, or other irregular shapes; for spherical particles, the particle size is the diameter; while for non-spherical or other irregularly shaped particles, the particle size is an equivalent particle size. The lithium-sodium composite manganese-based material of embodiments of the present application has an appropriate median particle size, facilitating formation of an appropriate specific surface area, and a micron-scale median particle size has low preparation process requirements, helping to cost control.

In some embodiments, a range of a particle size distribution span SPAN=[(Dv90-Dv10)/Dv50] of the lithium-sodium composite manganese-based material is 0.5≤SPAN≤2; in other embodiments, 0.5≤SPAN≤1.8, optionally 0.8≤SPAN≤1.4. For example, SPAN includes but is not limited to a point value of any one of 0.5, 0.52, 0.54, 0.56, 0.58, 0.6, 0.62, 0.64, 0.66, 0.68, 0.7, 0.72, 0.74, 0.76, 0.78, 0.8, 0.82, 0.84, 0.86, 0.88, 0.9, 0.92, 0.94, 0.96, 0.98, 1, 1.1, 1.2, 1.3, 1.4, 1.5, 1.6, 1.7, 1.8, 2, or a range value between any two thereof. Dv90 represents a particle size at which a cumulative particle size distribution of a sample reaches 90%, meaning that particles with a particle size less than this value account for 90% of all particles. Dv10 represents a particle size at which a cumulative distribution of particles is 10%, meaning that a volume content of particles smaller than this particle size accounts for 10% of all particles. A particle size distribution SPAN indicates a distribution of particle sizes. A larger SPAN indicates a wider particle size distribution, and a smaller SPAN indicates a more uniform particle size distribution. Dv90 and Dv10 can be determined in accordance with GB/T 19077-2016/ISO 13320:2009 "Particle Size Distribution Laser Diffraction Method," and SPAN is calculated based on tested Dv90 and Dv10. Particle size distribution significantly affects processing of a positive electrode material, and the SPAN range of the embodiments of the present application helps achieve a high electrode plate compacted density.

In some embodiments, (t+x)/(a+b+c)=0.9-1.4, optionally (t+x)/(a+b+c)=1.3-1.4. For example, (t+x)/(a+b+c) includes but is not limited to a point value of any one of 0.9, 0.92, 0.94, 0.96, 0.98, 1, 1.1, 1.2, 1.3, 1.4, or a range value between any two thereof. The (t+x)/(a+b+c) represents a molar ratio of Li, Ni, Co, and Mn in the lithium-sodium composite manganese-based material. An appropriate ratio of Li, Ni, Co, and Mn helps cation mixing in the lithium-sodium composite manganese-based material, improving cycling performance.

An embodiment of the present application further provides a preparation method of a lithium-sodium composite manganese-based material, including:
mixing raw materials and performing a first sintering treatment to obtain a lithium-sodium composite manganese-based material; where the raw materials include a lithium source, a sodium source, a nickel source, and a manganese source, and optionally further include a cobalt source, an M source, and an A source;
where the lithium-sodium composite manganese-based material includes LitNa_{y}[LiₓNiₐCo_{b}Mn_{c}M_{d}]AₚO_{q}, 0<y<0.2, 0.68≤t+y≤1, x+a+b+c+d=1, x>0, a≥0.17, 0<b<0.1, c≥0.4, 0≤d<0.04, 0≤p≤0.1, 0<q≤2, M includes one or more of V, Nb, Ta, Cr, Mo, B, Al, Ti, Zr, Mg, Ce, Fe, W, or Sn, and A includes one or more of F, S, N, or Cl.

In the preparation method of this embodiment of the present application, raw materials are first mixed and subjected to a first sintering treatment, which allows Na element to be doped at lithium sites, M element to be doped at manganese sites, and A element to be doped at oxygen sites, simultaneously achieving doping of Na, M, and A. The lithium-sodium composite manganese-based material prepared by this method exhibits high specific capacity, high first-cycle coulombic efficiency, and good cycling performance, with effectively suppressed gas evolution. In addition, the preparation method of the present application is simple to operate, suitable for mass production, cost-effective, and highly efficient.

In some embodiments, conditions of the first sintering treatment include one or more of the following (1) to (4):
(1) A temperature range of 700-1100°C of the first sintering treatment, optionally 750-1000°C;
(2) Heating to a temperature of the first sintering treatment at a rate of 2-10°C/min;
(3) Holding at the temperature of the first sintering treatment for 10-20 h;
(4) An oxygen-containing atmosphere.

In the embodiments of the present application, all references to an "oxygen-containing atmosphere" refer to a reaction atmosphere containing oxygen, where a volume percentage of oxygen in the atmosphere is greater than 0; exemplarily, a volume percentage of oxygen in the atmosphere can be set to 5%-100%; in some embodiments, a volume percentage of oxygen may be 20%-99.99%; in other embodiments, an oxygen-containing atmosphere may be air.

Appropriate sintering treatment conditions facilitate formation of a composite oxide material with high crystallinity and effective doping from a lithium source, a sodium source, a nickel source, a cobalt source, a manganese source, an M source, and an A source. The lithium-sodium composite manganese-based material prepared exhibits high specific capacity, high initial coulombic efficiency, good cycling performance, and significantly suppressed gas evolution.

In some embodiments, conditions of the first sintering treatment include one or more of the following (1) to (4):
(1) A temperature range of 780-990°C of the first sintering treatment;
(2) Heating to a temperature of the first sintering treatment at a rate of 2-5°C/min;
(3) Holding at the temperature of the first sintering treatment for 10-15 h;
(4) An oxygen-containing atmosphere, where a volume percentage of oxygen in the oxygen-containing atmosphere is 20%-99.99%.

More specifically, a temperature of the first sintering treatment includes but is not limited to a point value of any one of 700°C, 720°C, 740°C, 750°C, 760°C, 780°C, 800°C, 820°C, 840°C, 860°C, 880°C, 900°C, 920°C, 940°C, 960°C, 980°C, 990°C, 1000°C, 1100°C, or a range value between any two thereof.

A heating rate to the temperature of the first sintering treatment includes but is not limited to a point value of any one of 2°C/min, 2.5°C/min, 3°C/min, 3.5°C/min, 4°C/min, 4.5°C/min, 5°C/min, 5.5°C/min, 6°C/min, 6.5°C/min, 7°C/min, 7.5°C/min, 8°C/min, 8.5°C/min, 9°C/min, 9.5°C/min, 10°C/min, or a range value between any two thereof.

A holding time at the temperature of the first sintering treatment includes but is not limited to a point value of any one of 10 h, 10.5 h, 11 h, 11.5 h, 12 h, 12.5 h, 13 h, 13.5 h, 14 h, 14.5 h, 15 h, 15.5 h, 16 h, 16.5 h, 17 h, 17.5 h, 18 h, 18.5 h, 19 h, 19.5 h, 20 h, or a range value between any two thereof.

A volume percentage of oxygen in the oxygen-containing atmosphere includes but is not limited to a point value of any one of 1%, 5%, 10%, 15%, 20%, 25%, 30%, 35%, 40%, 45%, 50%, 55%, 60%, 65%, 70%, 75%, 80%, 85%, 90%, 95%, 99.99%, 100%, or a range value between any two thereof.

In some embodiments, the preparation method of the lithium-sodium composite manganese-based material further includes a washing treatment step for a product of the first sintering treatment.

After a first sintering treatment, alkaline substances (residual alkali) such as sodium hydroxide, lithium hydroxide, sodium carbonate, and lithium carbonate often remain, and a residual alkali content significantly affects performance of a positive electrode material and a battery preparation process. Performing a washing treatment step after the first sintering treatment can adjust a residual alkali content of the lithium-sodium composite manganese-based material, helping achieve low internal resistance, high specific capacity, and ensuring processability of a positive electrode slurry.

In some embodiments, the washing treatment step includes: washing the product of the first sintering treatment with a washing liquid; a pH range of the washing liquid is 1.5-7; in other embodiments, a pH range of the washing liquid is 2-7, optionally 2.5-7. For example, a pH of the washing liquid includes but is not limited to a point value of any one of 1.5, 1.8, 2, 2.2, 2.4, 2.5, 2.6, 2.8, 3, 3.2, 3.4, 3.6, 3.8, 4, 4.2, 4.4, 4.6, 4.8, 5, 5.2, 5.4, 5.6, 5.8, 6, 6.2, 6.4, 6.6, 6.8, 7, or a range value between any two thereof.

Washing treatment methods include but are not limited to rinsing and soaking. Treating a product of the first sintering treatment with an acidic or neutral washing liquid can result in an acid-base neutralization reaction or cleaning and dilution to adjust a residual alkali concentration of the product of the first sintering treatment, obtaining an appropriate residual alkali content, helping achieve low internal resistance, high specific capacity, and ensuring processability of a positive electrode slurry.

In some embodiments, in the washing treatment step, a solid-liquid ratio of the product of the first sintering treatment to the washing liquid is 1/35-1/6 g/mL; in other embodiments, the solid-liquid ratio of the product of the first sintering treatment to the washing liquid is 1/20-1/10 g/mL. For example, the solid-liquid ratio of the product of the first sintering treatment to the washing liquid includes but is not limited to a point value of any one of 1/35 g/mL, 1/30 g/mL, 1/25 g/mL, 1/20 g/mL, 1/15 g/mL, 1/10 g/mL, 1/6 g/mL, or a range value between any two thereof. An appropriate solid-liquid ratio enables repeated washing treatment of the product of the first sintering, adjusting the residual alkali content of the material.

In some embodiments, a duration of the washing treatment is 0.2-10 h; in other embodiments, a duration of the washing treatment is 0.25-4 h. For example, a duration of the washing treatment includes but is not limited to a point value of any one of 0.2 h, 0.25 h, 0.3 h, 0.35 h, 0.4 h, 0.5 h, 0.6 h, 0.7 h, 0.8 h, 0.9 h, 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, or a range value between any two thereof. In a washing treatment step, methods such as stirring, ultrasound, or vibration may be used to accelerate a treatment process. For example, a washing treatment includes a stirring step, where a stirring rate is 800-1200 r/min, optionally 900-1000 r/min, specifically including but not limited to a point value of any one of 800 r/min, 850 r/min, 900 r/min, 950 r/min, 1000 r/min, 1050 r/min, 1100 r/min, 1150 r/min, 1200 r/min, or a range value between any two thereof. Appropriate washing treatment conditions enable repeated washing treatment of the product of the first sintering, adjusting the residual alkali content of the material.

In some embodiments, the temperature of the washing treatment is 10-60°C; in some embodiments, the temperature of the washing treatment is 20-30°C, specifically including but not limited to a point value of any one of 10°C, 15°C, 20°C, 25°C, 30°C, 35°C, 40°C, 45°C, 50°C, 55°C, 60°C, or a range value between any two thereof. The washing treatment step can be performed under relatively mild conditions, even at room temperature, without requiring special heating, making it convenient to operate and energy-efficient.

In some embodiments, the washing liquid includes water and one or more acid solutions, where the acid solution includes but is not limited to a solution of any one or more of hydrochloric acid, sulfuric acid, nitric acid, acetic acid, citric acid, ammonium citrate, phosphoric acid, ammonium chloride, or ammonium sulfate (solvents include one or both of water and ethanol). Such acids or acidic salts can form an acid solution, performing acid-base neutralization on the product of the first sintering treatment, while avoiding introduction of impurity ions into the lithium-sodium composite manganese-based material.

In some embodiments, the preparation method of the lithium-sodium composite manganese-based material further includes a second sintering treatment step for a product of a first sintering treatment. Performing the second sintering treatment improves the crystallinity and reduces the oxygen defects of the lithium-sodium composite manganese-based material, thereby facilitating improvement of specific capacity, first-cycle coulombic efficiency, cycling performance, and suppression of gas evolution for the lithium-sodium composite manganese-based material. In some embodiments, when the preparation method of the lithium-sodium composite manganese-based material includes both a washing treatment step and a second sintering treatment step, the second sintering treatment step may be performed after the washing treatment step.

In some embodiments, conditions of the second sintering treatment include one or more of the following (i) to (iv):
(i) A temperature range of 300-700°C of the second sintering treatment, optionally 300-600°C;
(ii) Heating to a temperature of the second sintering treatment at a rate of 2-10°C/min;
(iii) Holding at the temperature of the second sintering treatment for 5-20 h;
(iv) An oxygen-containing atmosphere.

Performing the second sintering treatment under appropriate conditions improves the crystallinity and reduces the oxygen defects of the lithium-sodium composite manganese-based material, thereby facilitating improvement of specific capacity, first-cycle coulombic efficiency, cycling performance, and suppression of gas evolution for the lithium-sodium composite manganese-based material.

In some embodiments, conditions of the second sintering treatment include one or more of the following (i) to (iv):
(i) A temperature range of 400-550°C of the second sintering treatment;
(ii) Heating to a temperature of the second sintering treatment at a rate of 2-5°C/min;
(iii) Holding at the temperature of the second sintering treatment for 8-12 h;
(iv) An oxygen-containing atmosphere, where a volume percentage of oxygen in the oxygen-containing atmosphere is 20%-99.99%.

More specifically, the temperature of the second sintering treatment includes but is not limited to a point value of any one of 300°C, 320°C, 340°C, 360°C, 380°C, 400°C, 420°C, 440°C, 460°C, 480°C, 500°C, 520°C, 540°C, 550°C, 560°C, 580°C, 600°C, 620°C, 640°C, 660°C, 680°C, 700°C, or a range value between any two thereof.

A heating rate to the temperature of the second sintering treatment includes but is not limited to a point value of any one of 2°C/min, 2.5°C/min, 3°C/min, 3.5°C/min, 4°C/min, 4.5°C/min, 5°C/min, 5.5°C/min, 6°C/min, 6.5°C/min, 7°C/min, 7.5°C/min, 8°C/min, 8.5°C/min, 9°C/min, 9.5°C/min, 10°C/min, or a range value between any two thereof.

A holding time at the temperature of the second sintering treatment includes but is not limited to a point value of any one of 5 h, 5.5 h, 6 h, 6.5 h, 7 h, 7.5 h, 8 h, 8.5 h, 9 h, 9.5 h, 10 h, 10.5 h, 11 h, 11.5 h, 12 h, 12.5 h, 13 h, 13.5 h, 14 h, 14.5 h, 15 h, 15.5 h, 16 h, 16.5 h, 17 h, 17.5 h, 18 h, 18.5 h, 19 h, 19.5 h, 20 h, or a range value between any two thereof.

A volume percentage of oxygen in the oxygen-containing atmosphere includes but is not limited to a point value of any one of 1%, 5%, 10%, 15%, 20%, 25%, 30%, 35%, 40%, 45%, 50%, 55%, 60%, 65%, 70%, 75%, 80%, 85%, 90%, 95%, 99.99%, 100%, or a range value between any two thereof.

In some embodiments, the preparation method of the lithium-sodium composite manganese-based material further includes a particle size control step for a product of any one or more of a first sintering treatment, a washing treatment, and a second sintering treatment. Particle size control involves one or more processes of crushing, grinding, ball milling, or sieving to achieve a required particle size of a material. Performing particle size control on the product of the first sintering treatment facilitates sufficient contact between a material and a washing liquid, aiding in adjustment of residual alkali. Performing particle size control on the product of the washing treatment step disperses agglomerated particles from the washing treatment, facilitating the second sintering treatment. After the washing treatment step, solid-liquid separation and drying may be performed before particle size control. Performing particle size control on the product of the second sintering treatment enables the lithium-sodium composite manganese-based material to have an appropriate particle size and particle size distribution, facilitating processing of the lithium-sodium composite manganese-based material and achieving high electrode plate compacted density.

In some embodiments, a lithium source includes one or more of lithium hydroxide, lithium carbonate, lithium acetate, lithium nitrate, lithium oxalate, or lithium sulfate.

In some embodiments, a sodium source includes one or more of sodium hydroxide, sodium carbonate, sodium acetate, sodium nitrate, sodium oxalate, sodium sulfate, sodium chloride, sodium tungstate, sodium fluoride, sodium sulfide, sodium peroxide, or sodium aluminate.

In some embodiments, a nickel source includes one or more of nickel hydroxide, nickel carbonate, nickel acetate, nickel nitrate, nickel oxalate, nickel sulfate, nickel chloride, nickel tungstate, nickel fluoride, nickel sulfide, or a nickel-cobalt-manganese ternary composite hydroxide.

In some embodiments, a cobalt source includes one or more of cobalt hydroxide, cobalt carbonate, cobalt acetate, cobalt nitrate, cobalt oxalate, cobalt sulfate, cobalt chloride, cobalt tungstate, cobalt fluoride, cobalt sulfide, or a nickel-cobalt-manganese ternary composite hydroxide.

In some embodiments, a manganese source includes one or more of manganese hydroxide, manganese carbonate, manganese acetate, manganese nitrate, manganese oxalate, manganese sulfate, manganese chloride, manganese tungstate, manganese fluoride, manganese sulfide, or a nickel-cobalt-manganese ternary composite hydroxide.

A nickel-cobalt-manganese ternary composite hydroxide in the above nickel source, cobalt source, and manganese source can simultaneously provide nickel, cobalt, and manganese elements, with a chemical formula of Niₓ₁Co_{y1}Mn_{1-x1-y1}(OH)₂, where x1+y1<1, x1>0, y1>0; in some embodiments, 0<x1≤0.4; in some embodiments, 0<yl<0.1. For example, x1 includes but is not limited to a point value of any one of 0.01, 0.05, 0.1, 0.15, 0.2, 0.25, 0.3, 0.35, 0.4, or a range value between any two thereof; y1 includes but is not limited to a point value of any one of 0.01, 0.015, 0.02, 0.025, 0.03, 0.035, 0.04, 0.045, 0.05, 0.055, 0.06, 0.065, 0.07, 0.075, 0.08, 0.085, 0.09, 0.095, 0.1, or a range value between any two thereof.

In some embodiments, an atomic ratio of Ni, Co, and Mn in a nickel-cobalt-manganese ternary composite hydroxide is the same as an atomic ratio of Ni, Co, and Mn in the lithium-sodium composite manganese-based material LiₜNa_{y}[LiₓNiₐCo_{b}Mn_{c}M_{d}]AₚO_{q}. In some embodiments, a nickel-cobalt-manganese ternary composite hydroxide may be used alone as a nickel source, a cobalt source, and a manganese source, without using other nickel sources, cobalt sources, or manganese sources; in some embodiments, a nickel-cobalt-manganese ternary composite hydroxide may be used together with other nickel sources, cobalt sources, and manganese sources, such that nickel, cobalt, and manganese elements satisfy an element dosage ratio of the chemical formula LiₜNa_{y}[LiₓNiₐCo_{b}Mn_{c}M_{d}]AₚO_{q}.

In some embodiments, an M source includes one or more of a hydroxide of an M element, a carbonate of an M element, an acetate of an M element, a nitrate of an M element, an oxalate of an M element, a sulfate of an M element, a chloride of an M element, a tungstate of an M element, a fluoride of an M element, a sulfide of an M element, or an A compound of an M element.

In some embodiments, an A source includes one or more of an A compound of lithium, an A compound of sodium, an A compound of nickel, an A compound of cobalt, an A compound of manganese, or an A compound of an M element.

Both an M source and an A source may optionally be an A compound of an M element, and the compound can simultaneously provide the M element and the A element. In some embodiments, an A compound of an M element may be used alone as both an M source and an A source, without using other M sources or A sources; in some embodiments, an A compound of an M element may be used together with other M sources and A sources, such that M and A elements satisfy an element dosage ratio of the chemical formula LiₜNa_{y}[LiₓNiₐCo_{b}Mn_{c}M_{d}]AₚO_{q}.

An embodiment of the present application further provides a positive electrode plate, where the positive electrode plate includes the lithium-sodium composite manganese-based material as described above or a lithium-sodium composite manganese-based material prepared by the method as described above.

A "positive electrode" refers to a cathode of a battery, where a positive electrode contains a positive electrode material, namely an active substance. In a lithium-ion battery, during charging, lithium ions deintercalate from the lattice of a positive electrode material and, after passing through an electrolyte, intercalate into thee lattice of a negative electrode material; during discharging, lithium ions deintercalate from the lattice of the negative electrode material and, after passing through an electrolyte, intercalate into the lattice of the positive electrode material. The lithium-sodium composite manganese-based material of embodiments of the present application can serve as an active substance of a positive electrode plate, helping achieve high battery capacity, first-cycle coulombic efficiency, and cycling performance, and suppressing battery gas evolution.

In some embodiments, a loading amount of the lithium-sodium composite manganese-based material in a positive electrode plate is 10-50 mg/cm²; in other embodiments, a loading amount of the lithium-sodium composite manganese-based material in a positive electrode plate is 10-30 mg/cm². For example, the loading amount includes but is not limited to a point value of any one of 10 mg/cm², 15 mg/cm², 20 mg/cm², 25 mg/cm², 30 mg/cm², 35 mg/cm², 40 mg/cm², 45 mg/cm², 50 mg/cm², or a range value between any two thereof. A loading amount of the lithium-sodium composite manganese-based material in a positive electrode plate may also be flexibly set to other values based on actual needs.

In some embodiments, a positive electrode plate includes a positive electrode current collector and a positive electrode active material layer, the positive electrode active material layer being combined with the positive electrode current collector; where the positive electrode active material layer contains the lithium-sodium composite manganese-based material as described above or a lithium-sodium composite manganese-based material prepared by the method as described above. A positive electrode current collector serves as a substrate for combining with a positive electrode active material layer on an electrode, and as a current collector of a positive electrode plate, may be selected from a metal current collector, a carbon current collector, a conductive resin current collector, or a composite current collector of metal and resin, such as aluminum, nickel, stainless steel, carbon fiber, carbon nanotubes (CNT), or graphite. When applied as a positive electrode active material, the lithium-sodium composite manganese-based material of the embodiments of the present application is generally produced as a positive electrode active material layer, which is then combined with a current collector to form a complete positive electrode plate. A combination method of the positive electrode active material layer with the current collector may include: the positive electrode active material layer adhering to one or both surfaces of the current collector; or the positive electrode active material layer being encapsulated within the current collector; or other combination methods.

In some embodiments, the positive electrode active material layer further includes one or both of a conductive agent and a binder. The conductive agent and/or the binder may together with the lithium-sodium composite manganese-based material form an electrode active layer.

In the positive electrode plate, a conductive agent collects microcurrents between active substances and between active substances and the current collector, enhancing electronic conductivity, while a conductive agent may also promote infiltration of an electrolyte to the positive electrode plate. Example conductive agents include acetylene black (SP), carbon nanotubes, conductive carbon black (super-P), ketjen black, carbon fiber, and graphene. A ratio of the conductive agent to the lithium-sodium composite manganese-based material may be set based on requirements and proportions known in the art. As an example, a mass ratio of the conductive agent to the lithium-sodium composite manganese-based material is (30-100):1; in some embodiments, a mass ratio of the conductive agent to the lithium-sodium composite manganese-based material is (40-60):1. For example, a mass ratio of the conductive agent to the lithium-sodium composite manganese-based material includes but is not limited to a point value of any one of 30:1, 40:1, 50:1, 60:1, 70:1, 80:1, 90:1, 100:1, or a range value between any two thereof.

A binder is configured to enhance the binding capability of the positive electrode active material layer with the current collector. Example binders include polyvinylidene fluoride (PVDF), polyvinyl alcohol (PVA), polytetrafluoroethylene (PTFE), sodium carboxymethyl cellulose (CMC), fluorinated rubber, polyethylene, polypropylene, and polyurethane. A ratio of the binder to the lithium-sodium composite manganese-based material may be set based on requirements and proportions known in the art. As an example, a mass ratio of the binder to the lithium-sodium composite manganese-based material is (30-100):1; in some embodiments, a mass ratio of the binder to the lithium-sodium composite manganese-based material is (30-60):1. For example, a mass ratio of the binder to the lithium-sodium composite manganese-based material includes but is not limited to a point value of any one of 30:1, 40:1, 50:1, 60:1, 70:1, 80:1, 90:1, 100:1, or a range value between any two thereof.

An embodiment of the present application further provides a secondary battery, where the secondary battery includes the positive electrode plate as described above.

With the positive electrode plate containing the lithium-sodium composite manganese-based material of the embodiments of the present application applied to a secondary battery, the secondary battery exhibits high capacity, first-cycle coulombic efficiency, and cycling performance, and low gas evolution.

In some embodiments, the secondary battery of the embodiments of the present application includes one or more of a battery cell, a battery module, or a battery pack. Depending on packaging forms, secondary batteries are classified into battery cells, battery modules, and battery packs. A battery cell constitutes a basic unit of a secondary battery, including an electrode assembly and an electrolyte, where an electrode assembly typically includes a positive electrode plate, a negative electrode plate, and a separator. A battery cell primarily operates by movement of metal ions in an electrolyte between a positive electrode plate and a negative electrode plate. In some battery packaging technologies, multiple battery cells are first integrated into a battery module, and then a battery module is installed in a battery casing to form a battery pack. In other battery packaging technologies, multiple battery cells are directly installed in a housing to form a battery pack, eliminating an intermediate battery module state, thereby reducing a mass of the battery pack and increasing an energy density of the battery.

In some embodiments, thee secondary battery further includes a negative electrode plate, and during charging and discharging of the secondary battery, the negative electrode plate forms a circuit with thee positive electrode plate.

In some embodiments, the negative electrode plate may be a lithium metal sheet.

In some embodiments, the negative electrode plate may further include a negative electrode current collector and a negative electrode active material layer disposed on at least one surface of the negative electrode current collector. For example, the negative electrode current collector includes two opposite surfaces in a thickness direction, and the negative electrode active material layer is provided on either or both of the two surfaces of the negative electrode current collector.

In some embodiments, the negative electrode active material layer includes a negative electrode active material. As an example, the negative electrode active material may be natural graphite, artificial graphite, mesocarbon microbeads (MCMB), hard carbon, soft carbon, silicon, or a silicon-carbon composite.

In some embodiments, the negative electrode active material layer may further include a conductive agent and a binder. As an example, the conductive agent is one or more of graphite, superconducting carbon, acetylene black, carbon black, ketjen black, carbon dots, carbon nanotubes, graphene, or carbon nanofibers; the binder is one or more of styrene-butadiene rubber (SBR), polyvinylidene fluoride (PVDF), polytetrafluoroethylene (PTFE), polyvinyl butyral (PVB), water-based acrylic resin, or carboxymethyl cellulose (CMC).

In some embodiments, the negative electrode active material layer may optionally further include a thickener, such as carboxymethyl cellulose (CMC).

In some embodiments, the negative electrode current collector may be a metal foil or a porous metal plate with good electrical conductivity and mechanical properties, and a material thereof may be one or more of copper, nickel, titanium, iron, or their respective alloys. The negative electrode current collector is, for example, a copper foil.

In some embodiments, the negative electrode plate may be prepared according to conventional methods in the art. For example, a negative electrode active material, a conductive agent, a binder, and a thickener are dispersed in a solvent, where a solvent may be N-methylpyrrolidone (NMP) or deionized water, to form a uniform negative electrode slurry; the negative electrode slurry is applied on a negative electrode current collector, and after processes such as drying and rolling, a negative electrode plate is obtained.

In some embodiments, the secondary battery further includes an electrolyte. The electrolyte serves as a carrier for ion transmission in the secondary battery, ensuring that reactions occurring during operation of the secondary battery are reversible.

In some embodiments, the electrolyte may be a solid electrolyte, such as a polymer electrolyte or an inorganic solid electrolyte, but is not limited thereto. The electrolyte may alternatively be a liquid electrolyte. The liquid electrolyte includes a solvent and a lithium salt dissolved in a solvent.

The solvent may be a non-aqueous organic solvent, such as one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), or ethyl butyrate (EB), preferably two or more thereof.

The lithium salt may be one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), LiPO₂F₂ (lithium difluorophosphate), LiDFOP (lithium difluoro(oxalato)phosphate), or LiTFOP (lithium tetrafluoro(oxalato)phosphate), for example, one or more of LiPF₆ (lithium hexafluorophosphate), LiBF₄ (lithium tetrafluoroborate), LiBOB (lithium bis(oxalato)borate), LiDFOB (lithium difluoro(oxalato)borate), LiTFSI (lithium bis(trifluoromethanesulfonyl)imide), or LiFSI (lithium bis(fluorosulfonyl)imide).

The electrolyte may optionally further contain other additives, such as one or more of vinylene carbonate (VC), vinyl ethylene carbonate (VEC), fluoroethylene carbonate (FEC), difluoroethylene carbonate (DFEC), trifluoromethyl ethylene carbonate (TFPC), succinonitrile (SN), adiponitrile (ADN), glutaronitrile (GLN), hexanetricarbonitrile (HTN), 1,3-propane sultone (1,3-PS), ethylene sulfate (DTD), methylene methanedisulfonate (MMDS), 1-propene-1,3-sultone (PST), 4-methyl ethylene sulfate (PCS), 4-ethyl ethylene sulfate (PES), 4-propyl ethylene sulfate (PEGLST), propylene sulfate (TS), 1,4-butane sultone (1,4-BS), ethylene sulfite (DTO), dimethyl sulfite (DMS), diethyl sulfite (DES), cyclic quaternary ammonium sulfonate, tris(trimethylsilyl) phosphate (TMSP), or tris(trimethylsilyl) borate (TMSB), but is not limited thereto.

In some embodiments, a secondary battery further includes a separator stacked between a positive electrode plate and a negative electrode plate. In some secondary batteries, the separator is provided to separate the positive electrode plate from the negative electrode plate, preventing electrons within a battery from passing freely, avoiding short-circuiting between electrodes, while allowing ions in an electrolyte to pass freely between the positive electrode and the negative electrode.

The separator may be any known porous structure separator with electrochemical stability and mechanical stability, such as a single-layer or multilayer film of one or more of glass fiber, non-woven fabric, polyethylene (PE), polypropylene (PP), or polyvinylidene fluoride (PVDF).

The positive electrode plate and the negative electrode plate are alternately stacked, and the separator is disposed between the positive electrode plate and the negative electrode plate for separation, to obtain a battery cell, or a stack may be wound to obtain a battery cell. The battery cell is placed in a housing, and the electrolyte is injected, followed by sealing, to obtain a lithium-ion secondary battery.

In addition, an embodiment of the present application further provides an electric apparatus, where an electric apparatus includes the secondary battery as described above.

The secondary battery disclosed in this embodiment of the present application can be used in an electric apparatus using a battery as a power source, or in various energy storage systems using a battery as an energy storage element. The electric apparatus may include but is not limited to a mobile phone, a tablet, a notebook computer, an electric toy, an electric tool, an electric bicycle, an electric vehicle, a ship, or a spacecraft. The electric toy may include a fixed or mobile electric toy, such as a game console, an electric car toy, an electric ship toy, or an electric airplane toy, and a spacecraft may include an airplane, a rocket, a space shuttle, or a spaceship.

Specific embodiments are described below.

Testing methods for physicochemical properties and electrochemical performance of materials involved in embodiments of the present application are as follows.

### 1. XRD

A Bruker D8 Discovery device was used to perform X-ray diffraction pattern testing on a powder material, with slow scanning in a 2θ angle range of 10°-70°, at a scanning speed of 0.5°/min, to obtain an XRD pattern. Software was used to calculate peak areas of diffraction peaks at 2θ angles of 36.5±0.5° (101), 38.4±0.5° (102), 16.0±0.8° (002), and 18.6±0.6° (003) in the XRD pattern, and (I₁₀₁/I₁₀₂)^{0.5} and (I₀₀₂/I₀₀₃) were calculated.

### 2. Specific surface area test

The specific surface area was measured in accordance with GB/T 19587-2017 "Determination of Specific Surface Area of Solid Materials by Gas Adsorption BET Method," using a nitrogen adsorption specific surface area analysis testing method, and calculated using a BET (Brunauer Emmett Teller) method, where a nitrogen adsorption specific surface area analysis test was performed using a Tri-Star 3020 specific surface area and pore size analyzer from Micromeritics, USA.

### 3. Volume distribution particle sizes Dv10, Dv50, Dv90, and SPAN of particles

Dv10, Dv50, and Dv90 were measured using a Malvern 3000 device in accordance with GB/T 19077-2016/ISO 13320:2009 "Particle Size Distribution Laser Diffraction Method," and SPAN was calculated based on Dv10 and Dv90.

### 4. Residual alkali potentiometric titration test

In accordance with GB/T 9736-2008 "General Method for Determination of Acidity and Alkalinity of Chemical Reagents," 10-30 g of powder was weighed, added with 100 mL of pure water, and stirred for 30 min; a resulting mixture was allowed to stand for 10 min, and filtered, and a specified volume of the filtrate was taken; a 0.05 mol/L hydrochloric acid standard solution was used, air bubbles in a titration tube were expelled before titration, a corresponding sensor and program were selected to initiate a potentiometric titration, and a residual alkali content of a lithium-sodium composite manganese-based material was calculated.

### 5. Na content determination

In accordance with EPA 6010D-2014 "Inductively Coupled Plasma Atomic Emission Spectroscopy," an appropriate amount of the powder was weighed, digested in 1+1 aqua regia, and subjected to hotplate digestion at high-temperature (approximately 200°C). Element content (mass fraction w/w%) = element mass/sample weight * 100%.

### 6. Methods for testing initial specific capacity and initial efficiency of button cell

At 2.5-4.55 V, the cell was charged at 0.1C to 4.55 V, followed by constant voltage charging at 4.55 V until the current was ≤0.05 mA, and left standing for 5 min, where a charging capacity at that point was recorded as C0; then the cell was discharged at 0.1C to 2.5 V, where a discharge capacity at that point was an initial specific capacity (first discharge specific capacity), recorded as DO, and an initial efficiency was DO/CO * 100%.

### 7. Full battery cycling performance test

Under a constant temperature condition of 25°C, at a voltage of 2.0 V-4.45 V, the battery was charged at a 0.5C rate to 4.45 V, followed by constant voltage charging until the current was ≤0.05 mA, and left standing for 5 min, then discharged at a 0.5C rate to 2.0 V A discharge capacity was recorded, and the above process was repeated to obtain a capacity retention rate after 500 cycles. Capacity retention rate = first-cycle discharge capacity/discharge capacity at a specified cycle number × 100%.

### 8. Full battery gas evolution test at 60°C

A full battery at 100% state of charge (SOC) was stored at 60°C. Before, during, and after storage, the open-circuit voltage (OCV) and the alternating current internal resistance (IMP) of the cell were measured to monitor the state of charge (SOC), and the volume of the cell was measured. Every 48 h of storage, the full battery was taken out, left standing for 1 h, then its OCV and IMP were measured. After the cell was cooled to room temperature, its cell volume was measured using a water displacement method. In the water displacement method, first a balance that can automatically perform unit conversion on dial data was used to separately measure a gravitational force F₁ of the cell, then the cell was completely submerged into deionized water (density known to be 1 g/cm³), and the gravitational force F₂ of the cell at this moment was measured. The buoyant force F_{buoyancy} acting on the cell was calculated as F₁-F₂. Then, according to Archimedes' principle F_{buoyancy}=ρgV_{displaced}, where V_{displaced} was a volume of displaced water, a cell volume V=V_{displaced}=(F₁-F₂)/ρg was calculated.

After each volume measurement, the cell was recharged by charging at a constant current of 0.5C to 4.45 V, followed by constant voltage charging at 4.45 V until the current dropped to 0.05C, and after recharging, the cell was returned to the holding furnace for continued testing.

After 30 days of storage, the cell volume was measured, and an increase in cell volume after storage relative to the cell volume before storage, namely a gas evolution amount, was calculated.

### Example 1

This example provided a lithium-sodium composite manganese-based material with a chemical formula of Li_{0.847}Na_{0.033}[Li_{0.149}Ni_{0.255}Co_{0.043}Ce_{0.002}Mn_{0.551}]F_{0.002}O_{1.999}, and a preparation method thereof included the following steps:
Nickel-cobalt-manganese ternary composite hydroxide Ni_{0.3}Co_{0.05}Mn_{0.65}(OH)₂, lithium hydroxide, sodium oxalate, CeO₂, and CeF₃ were placed in a high-speed mixer at a molar ratio of 1.0:1.17:0.06:0.001:0.001 for mixing. Mixed materials were subjected to a first sintering at a sintering temperature (first sintering temperature) of 900°C, with a heating rate of 4°C/min, a sintering time of 15 h, and an oxygen content (volume percentage) in a first sintering atmosphere of 65.00%, to obtain intermediate product 1 after the first sintering. The intermediate product 1 was subjected to mechanical grinding and vibratory sieving to obtain a calcined material;
Ammonium citrate was dissolved in deionized water to prepare an acid solution with a pH of 2.57, then mixed with a weighed calcined material at a solid-liquid ratio of 1/10 g/mL for acid washing with stirring, with an acid washing time of 0.5 h and a stirring rate of 900 r/min; after acid washing, filtration, rinsing with deionized water, and further filtration were performed, followed by drying at 80°C for 10 h, and then mechanical grinding and vibratory sieving were performed to obtain intermediate product 2; and
The intermediate product 2 obtained in the above steps was subjected to secondary recalcination (second sintering) in a furnace, with a sintering temperature (second sintering temperature) of 450°C, a heating rate of 2°C/min, a sintering time of 10 h, and a sintering atmosphere of air; after sintering, the material underwent mechanical grinding and vibratory sieving to obtain a lithium-sodium composite manganese-based material. This lithium-sodium composite manganese-based material exhibited a Dv50 of 6.5 µm and a SPAN of 1.15.

### Examples 2-4

Examples 2-4 each provided a lithium-sodium composite manganese-based material, with chemical formulas as shown in Table 1.

The preparation method of lithium-sodium composite manganese-based materials in Examples 2-4 differed from Example 1 in that: a proportion of a Na source (that is, sodium oxalate) was adjusted.

Specifically, raw materials for Example 2 were mixed at a molar ratio of: Ni_{0.3}Co_{0.05}Mn_{0.65}(OH)₂:lithium hydroxide:sodium oxalate:CeO₂:CeF₃=1.0:1.17:0.020:0.001:0.001; raw materials for Example 3 were mixed at a molar ratio of: Ni_{0.3}Co_{0.05}Mn_{0.65}(OH)₂:lithium hydroxide:sodium oxalate:CeO₂:CeF₃=1.0:1.15:0.20:0.001:0.001; and raw materials for Example 4 were mixed at a molar ratio of: Ni_{0.3}Co_{0.05}Mn_{0.65}(OH)₂:lithium hydroxide:sodium oxalate: CeO₂:CeF₃=1.0:0.96:0.39:0.001:0.001.

Other steps were the same as in Example 1.

### Examples 5-6

Examples 5-6 each provided a lithium-sodium composite manganese-based material, with chemical formulas as shown in Table 1.

The preparation method of lithium-sodium composite manganese-based materials in Examples 5-6 differed from Example 1 in that: raw materials did not contain a cerium source or a fluorine source.

Specifically, raw materials for Example 5 were mixed at a molar ratio of: Ni_{0.3}Co_{0.05}Mn_{0.65}(OH)₂:lithium hydroxide:sodium oxalate:NH₄F=1.0:1.17:0.06:0.12; and raw materials for Example 6 were mixed at a molar ratio of: Ni_{0.3}Co_{0.05}Mn_{0.65}(OH)₂:lithium hydroxide:sodium oxalate: CeO₂=1.0:1.17:0.06:0.002.

Other steps were the same as in Example 1.

### Examples 7-8

Examples 7-8 each provided a lithium-sodium composite manganese-based material, with chemical formulas as shown in Table 1.

The preparation method of lithium-sodium composite manganese-based materials in Examples 7-8 differed from Example 1 in that: amounts of cerium and fluorine in raw materials were adjusted, such that a chemical formula of a lithium-sodium composite manganese-based material satisfied a corresponding chemical formula.

Other steps were the same as in Example 1.

### Examples 9-11

Examples 9-11 each provided a lithium-sodium composite manganese-based material, with chemical formulas as shown in Table 1.

The preparation method of lithium-sodium composite manganese-based materials in Examples 9-11 differed from Example 1 in that: cerium was replaced with antimony or molybdenum, while fluorine was replaced with sulfur; or fluorine was replaced with chlorine alone.

Other steps were the same as in Example 1.

### Examples 12-14

Examples 12-14 each provided a lithium-sodium composite manganese-based material, with a chemical formula identical to Example 1, as shown in Table 1.

The preparation method of lithium-sodium composite manganese-based materials in Examples 12-14 differed from Example 1 in that: a first sintering temperature was changed. Specifically, first sintering temperatures in Examples 12-14 were 780°C, 920°C, and 990°C, respectively.

Other steps were the same as in Example 1.

### Examples 15-18

Examples 15-18 each provided a lithium-sodium composite manganese-based material, with a chemical formula identical to Example 1, as shown in Table 1.

The preparation method of lithium-sodium composite manganese-based materials in Examples 15-18 differed from Example 1 in that: a pH value of an acid solution was changed. Specifically, pH values of an acid solution in Examples 15-18 were 2, 2.5, 5.5, and 7, respectively.

Other steps were the same as in Example 1.

### Examples 19-21

Examples 19-21 each provided a lithium-sodium composite manganese-based material, with a chemical formula identical to Example 1, as shown in Table 1.

The preparation method of lithium-sodium composite manganese-based materials in Examples 19-21 differed from Example 1 in that: a second sintering temperature was changed. Specifically, second sintering temperatures in Examples 19-21 were 300°C, 500°C, and 600°C, respectively.

Other steps were the same as in Example 1.

### Examples 22-24

Examples 22-24 each provided a lithium-sodium composite manganese-based material, with a chemical formula identical to Example 1, as shown in Table 1.

The preparation method of lithium-sodium composite manganese-based materials in Examples 22-24 differed from Example 1 in that: parameters of mechanical grinding and vibratory sieving after a first sintering were adjusted, such that a Dv50 of a lithium-sodium composite manganese-based material was changed. Specifically, Dv50 values of lithium-sodium composite manganese-based materials in Examples 22-24 were 3 µm, 10 µm, and 15 µm, respectively.

Other steps were the same as in Example 1.

### Examples 25-28

Examples 25-28 each provided a lithium-sodium composite manganese-based material, with a chemical formula identical to Example 1, as shown in Table 1.

The preparation method of lithium-sodium composite manganese-based materials in Examples 25-28 differed from Example 1 in that: parameters of mechanical grinding and vibratory sieving after a first sintering were adjusted, such that a Dv50 of a lithium-sodium composite manganese-based material remained unchanged, but a SPAN was changed. Specifically, SPAN values of lithium-sodium composite manganese-based materials in Examples 25-28 were 0.5, 0.8, 1.4, and 1.8, respectively.

Other steps were the same as in Example 1.

### Examples 29-30

Examples 29-30 each provided a lithium-sodium composite manganese-based material, with a chemical formula identical to Example 1, as shown in Table 1.

The preparation method of lithium-sodium composite manganese-based materials in Examples 29-30 differed from Example 1 in that: an oxygen content during first sintering was adjusted. Specifically, oxygen contents during first sintering in Examples 29-30 were 20.93% and 99.99%, respectively.

Other steps were the same as in Example 1.

### Examples 31-32

Examples 31-32 each provided a lithium-sodium composite manganese-based material, with chemical formulas as shown in Table 1.

The preparation method of lithium-sodium composite manganese-based materials in Examples 31-32 differed from Example 1 in that: a ratio of nickel, cobalt, and manganese in a nickel-cobalt-manganese ternary composite hydroxide and a ratio of a nickel-cobalt-manganese ternary composite hydroxide to other raw materials in the raw material were changed. Specifically, raw materials for Example 31 were mixed at a molar ratio of: Ni_{0.40}Mn_{0.60}(OH)₂:lithium hydroxide: sodium oxalate:CeO₂:CeF₃=1.0:1.065:0.165:0.001:0.003; and raw materials for Example 32 were mixed at a molar ratio of: Ni_{0.22}Co_{0.08}Mn_{0.70}(OH)₂:lithium hydroxide:sodium oxalate:CeO₂:CeF₃=1.0:1.299:0.150:0.001:0.001.

Other steps were the same as in Example 1.

### Examples 33-34

Examples 33-34 each provided a lithium-sodium composite manganese-based material, with a chemical formula identical to Example 1, as shown in Table 1.

The preparation method of lithium-sodium composite manganese-based materials in Examples 33-34 differed from Example 1 in that: a first sintering temperature was changed. Specifically, first sintering temperatures in Examples 33-34 were 700°C and 1100°C, respectively.

Other steps were the same as in Example 1.

### Example 35

Example 35 provided a lithium-sodium composite manganese-based material, with a chemical formula as shown in Table 1.

The preparation method of a lithium-sodium composite manganese-based material in Example 35 differed from Example 1 in that: a ratio between a lithium source and a sodium source was changed (reducing a lithium source while increasing a sodium source), and a pH of an acid solution was reduced to 1.5.

Specifically, raw materials for Example 35 were mixed at a molar ratio of: Ni_{0.3}Co_{0.05}Mn_{0.65}(OH)₂:lithium hydroxide: sodium oxalate:CeO₂:CeF₃=1.0:0.96:0.39:0.001:0.001, and a pH of an acid solution was 1.5.

### Comparative example 1

This Comparative example 1 provided a composite manganese-based material, with a chemical formula as shown in Table 1.

The composite manganese-based material in Comparative example 1 differed from Example 1 in that: no sodium was doped. Correspondingly, in a preparation method of a composite manganese-based material in Comparative example 1, raw materials did not contain sodium oxalate.

Other steps were the same as in Example 1.

### Comparative example 2

This Comparative example 2 provided a lithium-sodium composite manganese-based material, with a chemical formula as shown in Table 1.

The lithium-sodium composite manganese-based material in Comparative example 2 differed from Example 1 in that: a doping amount of sodium was increased, such that t+y<0.68 in its chemical formula.

Correspondingly, in the preparation method of a lithium-sodium composite manganese-based material in Comparative example 2, a proportion of the sodium oxalate raw material was increased. Specifically, raw materials for Comparative example 2 were mixed at a molar ratio of: Ni_{0.3}Co_{0.05}Mn_{0.65}(OH)₂:lithium hydroxide:sodium oxalate:CeO₂:CeF₃=1.0:0.37:0.98:0.001:0.001.

Other steps were the same as in Example 1.

### Comparative example 3

This comparative example 3 provided a lithium-sodium composite manganese-based material, with a chemical formula as shown in Table 1.

The lithium-sodium composite manganese-based material in Comparative example 3 differed from Example 1 in that: a cobalt content was increased, such that b>0.1 in a chemical formula, while contents of other elements were adaptively adjusted to meet a requirement for lattice stability. Correspondingly, in the preparation method of the lithium-sodium composite manganese-based material in Comparative example 3, the proportion of raw materials was adaptively adjusted according to a chemical formula.

Other steps were the same as in Example 1.

### Comparative example 4

This comparative example 4 provided a lithium-sodium composite manganese-based material, with a chemical formula as shown in Table 1.

A lithium-sodium composite manganese-based material in Comparative example 4 differed from Example 1 in that: a cerium content was increased, such that d≥0.04 in a chemical formula. Correspondingly, in the preparation method of the lithium-sodium composite manganese-based material in Comparative example 4, the proportion of raw materials was adaptively adjusted according to a chemical formula. Specifically, raw materials for Comparative example 4 were mixed at a molar ratio of: Ni_{0.3}Co_{0.05}Mn_{0.65}(OH)₂:lithium hydroxide:sodium oxalate:CeO₂:CeF₃=1.0:0.37:0.98:0.05:0.001.

Other steps were the same as in Example 1.

### Comparative example 5

This comparative example 5 provided a lithium-sodium composite manganese-based material, with a chemical formula as shown in Table 1.

The lithium-sodium composite manganese-based material in Comparative example 5 differed from Example 1 in that: a fluorine content was increased, such that p>0.1 in a chemical formula. Correspondingly, in the preparation method of the lithium-sodium composite manganese-based material in Comparative example 5, the proportion of raw materials was adaptively adjusted according to a chemical formula. Specifically, raw materials for Comparative example 5 were mixed at a molar ratio of: Ni_{0.3}Co_{0.05}Mn_{0.65}(OH)₂:lithium hydroxide:sodium oxalate: CeO₂:NH₄F=1.0:0.37:0.98:0.002:0.235.

Other steps were the same as in Example 1.

### Comparative example 6

This comparative example 6 provided a lithium-sodium composite manganese-based material, with a chemical formula as shown in Table 1.

The preparation method of the lithium-sodium composite manganese-based material in Comparative example 6 differed from Example 1 in that: a ratio between a lithium source and a sodium source was changed (reducing a lithium source while increasing a sodium source). Specifically, raw materials for Comparative example 6 were mixed at a molar ratio of: Ni_{0.3}Co_{0.05}Mn_{0.65}(OH)₂:lithium hydroxide: sodium oxalate:CeO₂:CeF₃=1.0:0.77:0.06:0.001:0.001, such that t+y<0.68 in a chemical formula of Comparative example 6.

Other steps were the same as in Example 1.

Chemical formulas and element contents of lithium-sodium composite manganese-based materials (or composite manganese-based materials) in each example and comparative example are shown in Table 1. In addition, some preparation parameters of lithium-sodium composite manganese-based materials (or composite manganese-based materials) in each example and comparative example are shown in Table 2.

**Table 1. Chemical formulas and element contents of lithium-sodium composite manganese-based materials (or composite manganese-based materials)**

| | Chemical formula | Li | Na | | Ni | Co | Mn | M | | A | |
|---|---|---|---|---|---|---|---|---|---|---|---|
| | LiₜNa_{y}[LiₓNiₐCo_{b}Mn_{c}M_{d}]AₚO_{q} | t+x | 0<y<0.2 | 0.68≤t+y≤1 | a≥0.17 | 0<b<0.1 | c>0.4 | 0<d<0.04 | | 0≤p≤0.1 | |
| Example1 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 2 | Li_{0.847}Na_{0.01}[Li_{0.149}Ni_{0.255}Co_{0.043}Ce_{0.002} Mn_{0.551}]F_{0.002}O_{1.999} | 0.996 | 0.01 | 0.857 | 0.255 | 0.043 | 0.551 | Ce | 0.002 | F | 0.002 |
| Example 3 | Li_{0.830}Na_{0.1}[Na_{0.1}[Li_{0.149}Ni_{0.255}Co_{0.043}Ce_{0.002}M n_{0.551}]F_{0.002}O_{1.999} | 0.979 | 0.1 | 0.93 | 0.255 | 0.043 | 0.551 | Ce | 0.002 | F | 0.002 |
| Example 4 | Li_{0.668}Na_{0.2}[Li_{0.149}Ni_{0.255}Co_{0.043}Ce_{0.002}M n_{0.551}]F_{0.002}O_{1.999} | 0.818 | 0.2 | 0.868 | 0.255 | 0.043 | 0.551 | Ce | 0.002 | F | 0.002 |
| Example 5 | Li_{0.847}Na_{0.033}[Li_{0.149}Ni_{0.255}Co_{0.043}Mn_{0.553} ]F_{0.1}O_{1.95} | 0.996 | 0.033 | 0.88 | 0.255 | 0.043 | 0.553 | / | 0 | F | 0.1 |
| Example 6 | Li_{0.847}Na_{0.033}[Li_{0.149}Ni_{0.255}Co_{0.043}Ce_{0.002} Mn_{0.551}]O₂ | 0.996 | 0.033 | 0.88 | 0.255 | 0.043 | 0.551 | Ce | 0.002 | / | 0 |
| Example 7 | Li_{0.847}Na_{0.033}[Li_{0.149}Ni_{0.255}Co_{0.043}Ce_{0.005} Mn_{0.548}]F_{0.008}O_{1.996} | 0.996 | 0.033 | 0.88 | 0.255 | 0.043 | 0.548 | Ce | 0.005 | F | 0.008 |
| Example 8 | Li_{0.847}Na_{0.033[}Li_{0.149}Ni_{0.255}Co_{0.043}Ce_{0.009} Mn₅₄₄]F_{0.018}O_{1.991} | 0.996 | 0.033 | 0.88 | 0.255 | 0.043 | 0.544 | Ce | 0.009 | F | 0.018 |
| Example 9 | Li_{0.847}Na_{0.033}[Li_{0.149}Ni_{0.043}Co_{0.043}Sb₀₄₃Sb_{0.002} Mn_{0.551}]S_{0.002}O_{1.998} | 0.996 | 0.033 | 0.88 | 0.255 | 0.043 | 0.551 | Sb | 0.002 | S | 0.002 |
| Example 10 | Li_{0.847}Na_{0.033}[Li_{0.149}Ni_{0.255}Co_{0.043}Mo_{0.002} H_{0.551}]S_{0.00}O_{1.997} | 0.996 | 0.033 | 0.88 | 0.255 | 0.043 | 0.551 | Mo | 0.002 | S | 0.003 |
| Example 11 | Li_{0.847}Na_{0.033}[Li_{0.149}Ni_{0.255}Co_{0.043}Ce_{0.001} Mn_{0.552}]Cl_{0.002}O_{1.999} | 0.996 | 0.033 | 0.88 | 0.255 | 0.043 | 0.551 | Ce | 0.001 | Cl | 0.002 |
| Example 12 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 13 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 14 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 15 | Li_{0.847}Na_{0.015}[Li_{0.149}49Ni_{0.255}Co_{0.043}Ce_{0.002} Mn_{0.551}]F_{0.002}O_{1.999} | 0.996 | 0.015 | 0.862 | 0.255 | 0.043 | 0.551 | Ce | 0.002 | F | 0.002 |
| Example 16 | Li_{0.847}Na_{0.020}[Li_{0.149}Ni_{0.255}CO_{0.043}Ce_{0.002} Mn_{0.551}]F_{0.002}O_{1.999} | 0.996 | 0.02 | 0.867 | 0.255 | 0.043 | 0.551 | Ce | 0.002 | F | 0.002 |
| Example 17 | Li_{0.847}Na_{0.036}[Li₀₁₄₉Ni_{0.255}Co_{0.043}Ce_{0.002} Mn_{0.551}]F_{0.002}O_{1.999} | 0.996 | 0.036 | 0.883 | 0.255 | 0.043 | 0.551 | Ce | 0.002 | F | 0.002 |
| Example 18 | Li_{0.847}Na_{0.043}[Li_{0.149}Ni_{0.255}CO_{0.043}Ce_{0.002} Mn_{0.331}]F_{0.002}O_{1.999} | 0.996 | 0.043 | 0.89 | 0.255 | 0.043 | 0.551 | Ce | 0.002 | F | 0.002 |
| Example 19 | Li_{0.847}Na_{0.033}[Li_{0.149}Ni₀₂₅₅Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 20 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 21 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 22 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 23 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 24 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 25 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 26 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 27 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 28 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 29 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 30 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 31 | Li_{0.852}Na_{0.089}[Li_{0.103}Ni_{0.359}Ce_{0.004}Mn_{0.534} ]F_{0.008}O_{1.996} | 0.955 | 0.089 | 0.941 | 0.359 | 0 | 0.534 | Ce | 0.002 | F | 0.002 |
| Example 32 | Li_{0.917}Na_{0.075}[Li_{0.166}Ni_{0.183}Co_{0.067}Ce_{0.002} Mn_{0.582}]F_{0.002}O_{1.999} | 1.083 | 0.075 | 0.992 | 0.183 | 0.067 | 0.582 | Ce | 0.002 | F | 0.002 |
| Example 33 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 34 | Li_{0.847}Na_{0.033}[Li_{0.149}Ni_{0.255}Co_{0.043}Ce_{0.002} Mn_{0.551}]F_{0.002}O_{1.999} | 0.996 | 0.033 | 0.88 | 0.255 | 0.043 | 0.551 | Ce | 0.002 | F | 0.002 |
| Example 35 | Li_{0.668}Na_{0.2}[Li_{0.149}Ni_{0.255}Co_{0.043}Ce_{0.002}M n_{0.551}]F_{0.002}O_{1.999} | 0.818 | 0.2 | 0.868 | 0.255 | 0.043 | 0.551 | Ce | 0.002 | F | 0.002 |
| Comparative example 1 | Li[Li_{0.149}Ni_{0.255}Co_{0.043}Ce_{0.002}Mn_{0.551}]F_{0. 002}O_{1.999} | 1.149 | 0 | 0.149 | 0.255 | 0.043 | 0.551 | Ce | 0.002 | F | 0.002 |
| Comparative example 2 | Li_{0.166}Na_{0.5}[Li_{0.149}Ni_{0.255}Co_{0.043}Ce_{0.002}M n_{0.551}]F_{0.002}O_{1.999} | 0.315 | 0.5 | 0.666 | 0.255 | 0.043 | 0.551 | Ce | 0.002 | F | 0.002 |
| Comparative example 3 | Li_{0.855}Na_{0.087}[Li_{0.09}Ni_{0.273}Co_{0.182}Ce_{0.002} Mn_{0.453}]F_{0.002}O_{1.999} | 0.945 | 0.087 | 0.942 | 0.273 | 0.182 | 0.453 | Ce | 0.002 | F | 0.002 |
| Comparative example 4 | Li_{0.847}Na_{0.033}[Li_{0.149}Ni_{0.255}Co_{0.043}Ce_{0.04} Mn_{0.513}]F_{0.002}O_{1.999} | 0.996 | 0.033 | 0.88 | 0.255 | 0.043 | 0.513 | Ce | 0.04 | F | 0.002 |
| Comparative example 5 | Li_{0.847}Na_{0.033}[Li_{0.149}Ni_{0.255}Co_{0.043}Ce_{0.002} Mn_{0.551}]F_{0.2}O_{1.9} | 0.996 | 0.033 | 0.88 | 0.255 | 0.043 | 0.551 | Ce | 0.002 | F | 0.2 |
| Comparative example 6 | Li_{0.506}Na_{0.033}[Li_{0.149}Ni_{0.255}Co_{0.043}Ce_{0.002} Mn_{0.551}]F_{0.002}O_{1.999} | 0.655 | 0.033 | 0.539 | 0.255 | 0.043 | 0.551 | Ce | 0.002 | F | 0.002 |

**Table 2. Preparation parameters of lithium-sodium composite manganese-based materials (or composite manganese-based materials)**

| | First sintering temperature (°C) | Oxygen content during first sintering | Acid solution pH | Second sintering temperature (°C) |
|---|---|---|---|---|
| | 700-1100 | >0 | 1.5-7 | 300-700 |
| Example 1 | 900 | 65.00% | 4.5 | 400 |
| Example 2 | 900 | 65.00% | 4.5 | 400 |
| Example 3 | 900 | 65.00% | 4.5 | 400 |
| Example 4 | 900 | 65.00% | 4.5 | 400 |
| Example 5 | 900 | 65.00% | 4.5 | 400 |
| Example 6 | 900 | 65.00% | 4.5 | 400 |
| Example 7 | 900 | 65.00% | 4.5 | 400 |
| Example 8 | 900 | 65.00% | 4.5 | 400 |
| Example 9 | 900 | 65.00% | 4.5 | 400 |
| Example 10 | 900 | 65.00% | 4.5 | 400 |
| Example 11 | 900 | 65.00% | 4.5 | 400 |
| Example 12 | 780 | 65.00% | 4.5 | 400 |
| Example 13 | 920 | 65.00% | 4.5 | 400 |
| Example 14 | 990 | 65.00% | 4.5 | 400 |
| Example 15 | 900 | 65.00% | 2 | 400 |
| Example 16 | 900 | 65.00% | 2.5 | 400 |
| Example 17 | 900 | 65.00% | 5.5 | 400 |
| Example 18 | 900 | 65.00% | 7 | 400 |
| Example 19 | 900 | 65.00% | 4.5 | 300 |
| Example 20 | 900 | 65.00% | 4.5 | 500 |
| Example 21 | 900 | 65.00% | 4.5 | 600 |
| Example 22 | 900 | 65.00% | 4.5 | 400 |
| Example 23 | 900 | 65.00% | 4.5 | 400 |
| Example 24 | 900 | 65.00% | 4.5 | 400 |
| Example 25 | 900 | 65.00% | 4.5 | 400 |
| Example 26 | 900 | 65.00% | 4.5 | 400 |
| Example 27 | 900 | 65.00% | 4.5 | 400 |
| Example 28 | 900 | 65.00% | 4.5 | 400 |
| Example 29 | 900 | 20.93% | 4.5 | 400 |
| Example 30 | 900 | 99.99% | 4.5 | 400 |
| Example 31 | 900 | 65.00% | 4.5 | 400 |
| Example 32 | 900 | 65.00% | 4.5 | 400 |
| Example 33 | 700 | 65.00% | 4.5 | 400 |
| Example 34 | 1100 | 65.00% | 4.5 | 700 |
| Example 35 | 900 | 65.00% | 1.5 | 400 |
| Comparative example 1 | 900 | 65.00% | 4.5 | 400 |
| Comparative example 2 | 900 | 65.00% | 4.5 | 400 |
| Comparative example 3 | 900 | 65.00% | 4.5 | 400 |
| Comparative example 4 | 900 | 65.00% | 4.5 | 400 |
| Comparative example 5 | 900 | 65.00% | 4.5 | 400 |
| Comparative example 6 | 900 | 65.00% | 4.5 | 400 |

Structural and performance characterizations, including BET specific surface area, SPAN, Dv50, sodium mass percentage (Na%), residual alkali content (that is, mass fraction of alkaline substances), and key diffraction peak area ratios in X-ray diffraction patterns, were performed on lithium-sodium composite manganese-based materials (or composite manganese-based materials) of each example and comparative example, with results shown in Table 3 below.

**Table 3. Structural and performance characterization results of lithium-sodium composite manganese-based materials (or composite manganese-based materials)**

| | BET (m²/g) | SPAN | Dv50 (µm) | Na% | Residual alkali content (ppm) | (I₁₀₁/I₀₁₂)^{0.5} | I₀₀₂/I₀₀₃ |
|---|---|---|---|---|---|---|---|
| | 0.3-12 | 0.5-2 | 2-15 | 0-6% | 250-3000 | >1.96 | 0-0.40 |
| Example 1 | 2.7 | 1.15 | 6.5 | 0.8% | 510 | 2.03 | 0.04 |
| Example 2 | 2.4 | 1.15 | 6.5 | 0.3% | 360 | 2.05 | 0.03 |
| Example 3 | 3.5 | 1.15 | 6.5 | 2.3% | 1250 | 2.01 | 0.13 |
| Example 4 | 4.0 | 1.15 | 6.5 | 6.0% | 3000 | 1.97 | 0.40 |
| Example 5 | 2.1 | 1.16 | 6.5 | 0.8% | 460 | 2.02 | 0.02 |
| Example 6 | 2.6 | 1.15 | 6.5 | 0.8% | 510 | 2.02 | 0.04 |
| Example 7 | 2.9 | 1.15 | 6.5 | 0.8% | 470 | 2.01 | 0.04 |
| Example 8 | 3.2 | 1.15 | 6.5 | 0.8% | 450 | 1.98 | 0.04 |
| Example 9 | 2.8 | 1.15 | 6.5 | 0.8% | 510 | 2.03 | 0.04 |
| Example 10 | 2.7 | 1.15 | 6.5 | 0.8% | 510 | 2.03 | 0.04 |
| Example 11 | 2.5 | 1.15 | 6.5 | 0.8% | 400 | 2.03 | 0.04 |
| Example 12 | 3.3 | 1.15 | 6.5 | 0.8% | 2,000 | 2.02 | 0.02 |
| Example 13 | 2.0 | 1.15 | 6.5 | 0.8% | 420 | 2.01 | 0.04 |
| Example 14 | 0.4 | 1.15 | 6.5 | 0.8% | 330 | 1.99 | 0.04 |
| Example 15 | 10.0 | 1.15 | 6.1 | 0.4% | 300 | 1.97 | 0.01 |
| Example 16 | 8.6 | 1.15 | 6.5 | 0.5% | 350 | 1.97 | 0.01 |
| Example 17 | 4.9 | 1.15 | 6.5 | 0.8% | 640 | 2.05 | 0.04 |
| Example 18 | 1.1 | 1.15 | 6.5 | 1.0% | 860 | 2.10 | 0.05 |
| Example 19 | 3.5 | 1.15 | 6.5 | 0.8% | 810 | 2.01 | 0.05 |
| Example 20 | 2.2 | 1.15 | 6.5 | 0.8% | 430 | 2.03 | 0.04 |
| Example 21 | 1.8 | 1.15 | 6.7 | 0.8% | 350 | 2.07 | 0.04 |
| Example 22 | 5.5 | 1.15 | 3 | 0.8% | 630 | 2.02 | 0.04 |
| Example 23 | 1.6 | 1.15 | 10 | 0.8% | 480 | 2.03 | 0.04 |
| Example 24 | 0.5 | 1.15 | 15 | 0.8% | 420 | 2.03 | 0.04 |
| Example 25 | 2.7 | 0.5 | 6.5 | 0.8% | 420 | 2.06 | 0.04 |
| Example 26 | 2.7 | 0.8 | 6.5 | 0.8% | 490 | 2.04 | 0.04 |
| Example 27 | 2.7 | 1.4 | 6.5 | 0.8% | 610 | 2.01 | 0.04 |
| Example 28 | 2.7 | 1.8 | 6.5 | 0.8% | 730 | 2.00 | 0.04 |
| Example 29 | 2.7 | 1.15 | 6.5 | 0.8% | 650 | 1.96 | 0.04 |
| Example 30 | 2.7 | 1.15 | 6.5 | 0.8% | 490 | 2.07 | 0.04 |
| Example 31 | 2.7 | 1.15 | 6.5 | 2.0% | 1160 | 2.04 | 0.10 |
| Example 32 | 2.7 | 1.15 | 6.5 | 1.8% | 1020 | 1.99 | 0.08 |
| Example 33 | 3.6 | 1.15 | 6.5 | 0.8% | 3500 | 2.01 | 0.02 |
| Example 34 | 0.3 | 1.15 | 6.5 | 0.8% | 270 | 1.97 | 0.03 |
| Example 35 | 10.9 | 1.9 | 6.2 | 4.7% | 330 | 1.85 | 0.02 |
| Comparative example 1 | 2.7 | 1.15 | 6.5 | 0.0% | 680 | 2.05 | 0.04 |
| Comparative example 2 | 3.6 | 1.15 | 6.5 | 11.7% | 4860 | 1.91 | 0.56 |
| Comparative example 3 | 3.1 | 1.15 | 6.5 | 2.0% | 1080 | 1.99 | 0.11 |
| Comparative example 4 | 2.1 | 1.15 | 6.5 | 1.8% | 460 | 1.98 | 0.04 |
| Comparative example 5 | 2.1 | 1.15 | 6.5 | 0.8% | 510 | 2.03 | 0.04 |
| Comparative example 6 | 6.3 | 1.23 | 6.5 | 0.8% | 230 | 1.93 | 0.04 |

### Electrochemical Performance Testing

Lithium-sodium composite manganese-based materials (or composite manganese-based materials) from the above examples and comparative examples were used as positive electrode active materials to prepare positive electrode plates, which were assembled into lithium-ion batteries, and then subjected to electrochemical performance testing.

Specifically, each lithium-sodium composite manganese-based material (or composite manganese-based material) from the examples and comparative examples was individually placed into a 5L mixing tank and pre-mixed for 30 min. Subsequently, conductive agent acetylene black (Super P) and binder polyvinylidene fluoride (PVDF) were added, followed by an additional 30 minutes of dry mixing. Finally, solvent N-methyl-2-pyrrolidone (NMP) was introduced under vacuum conditions, and the mixture was rapidly stirred to form a homogeneous slurry. A mass ratio of positive electrode active material: acetylene black:polyvinylidene fluoride was 96:2:2, and a solid content of a slurry was 70 wt%. A slurry was uniformly applied to two sides of an aluminum foil with a thickness of 12 µm, and a coated electrode plate was dried in an oven at 130°C for half an hour and then removed to obtain a positive electrode plate. A loading amount of the positive electrode active material on the positive electrode plate was 21.5 mg/cm². Negative electrode active material, artificial graphite and hard carbon, conductive agent acetylene black, binder styrene-butadiene rubber (SBR), and thickener sodium carboxymethyl cellulose (CMC) were thoroughly stirred and mixed uniformly at a mass ratio of 90:5:2:2:1 in a deionized water solvent system, and a resulting slurry was applied to a copper foil. A resulting copper foil was dried, and cold-pressed to obtain a negative electrode plate.

A porous polyethylene polymeric film was used as a separator. The positive electrode plate, the separator, and the negative electrode plate as described above were stacked in order, with the separator positioned between the positive electrode plate and the negative electrode plate for separation, and wound to obtain a bare cell. The bare cell was placed in an outer packaging, injected with a prepared base electrolyte, namely 1 mol/L LiPF₆/(EC+EMC+DMC) (volume ratio of 1:1:1), and sealed to obtain a lithium-ion battery.

Assembled lithium-ion batteries were tested, and test results are shown in Table 4 below.

**Table 4. Electrochemical test results of batteries assembled with a lithium-sodium composite manganese-based material (or a composite manganese-based material)**

| | First discharge specific capacity (mAh/g) | Initial efficiency (%) | Cycle capacity retention rate at 25°C (500 cycles, %) | Gas evolution amount at 60°C (30 days, mL/Ah) |
|---|---|---|---|---|
| Example 1 | 230 | 91.2% | 91.6% | 2.9 |
| Example 2 | 227 | 90.5% | 91.2% | 2.8 |
| Example 3 | 228 | 92.0% | 90.9% | 3.7 |
| Example 4 | 226 | 92.8% | 90.2% | 4.8 |
| Example 5 | 223 | 90.6% | 92.1% | 2.1 |
| Example 6 | 228 | 91.0% | 91.3% | 3.2 |
| Example 7 | 226 | 91.0% | 91.8% | 2.8 |
| Example 8 | 224 | 90.9% | 91.9% | 2.7 |
| Example 9 | 229 | 91.1% | 91.5% | 3.1 |
| Example 10 | 229 | 91.0% | 91.5% | 2.8 |
| Example 11 | 227 | 90.7% | 91.2% | 3.2 |
| Example 12 | 229 | 91.3% | 91.5% | 3.3 |
| Example 13 | 228 | 90.9% | 91.6% | 2.9 |
| Example 14 | 226 | 90.7% | 91.3% | 3 |
| Example 15 | 234 | 91.6% | 90.6% | 4 |
| Example 16 | 233 | 91.6% | 90.6% | 3.8 |
| Example 17 | 229 | 91.1% | 91.5% | 3.2 |
| Example 18 | 229 | 91.5% | 91.4% | 3.3 |
| Example 19 | 228 | 91.2% | 91.5% | 3.1 |
| Example 20 | 223 | 90.8% | 91.6% | 2.8 |
| Example 21 | 222 | 90.6% | 91.8% | 2.7 |
| Example 22 | 231 | 91.4% | 91.1% | 3.4 |
| Example 23 | 227 | 90.9% | 91.4% | 2.9 |
| Example 24 | 225 | 90.7% | 91.3% | 2.9 |
| Example 25 | 226 | 91.1% | 91.5% | 2.8 |
| Example 26 | 228 | 91.1% | 91.5% | 2.9 |
| Example 27 | 231 | 91.2% | 91.3% | 3.1 |
| Example 28 | 233 | 91.4% | 91.2% | 3.1 |
| Example 29 | 226 | 90.8% | 91.4% | 3.1 |
| Example 30 | 228 | 91.1% | 91.5% | 2.9 |
| Example 31 | 229 | 91.5% | 91.4% | 3.1 |
| Example 32 | 230 | 91.4% | 91.5% | 3.3 |
| Example 33 | 223 | 91.0% | 89.5% | 3 |
| Example 34 | / | 90.5% | 91.4% | 3.3 |
| Example 35 | 236 | 93.3% | 88.2% | / |
| Comparative example 1 | 217 | 89.3% | / | / |
| Comparative example 2 | 218 | / | 86.3% | 5.8 |
| Comparative example 3 | 211 | / | / | / |
| Comparative example 4 | 219 | 90.3% | / | / |
| Comparative example 5 | 217 | 90.1% | / | / |
| Comparative example 6 | 210 | 89.0% | 85.3% | 5.7 |

Tables 1 to 4 indicate the following:
Examples 1 to 35 show that, after doping an appropriate amount of Na, M (optionally including Ce, Sb, Mo, or the like), and A (optionally including F, S, Cl, or the like) into a lithium-sodium composite manganese-based material, the lithium-sodium composite manganese-based material exhibits a low residual alkali concentration. When such a lithium-sodium composite manganese-based material is used as a positive electrode active material, the positive electrode achieves high discharge specific capacity and initial efficiency, maintains a high capacity retention rate after 500 cycles at room temperature, exhibiting excellent cycling performance, and shows low gas evolution after storage at 60°C for 30 days, indicating good safety.

In contrast, as shown in Comparative example 1, in the absence of Na doping in a composite manganese-based material, the first discharge specific capacity and initial efficiency of the positive electrode are significantly reduced. The first discharge specific capacity is reduced by 3.98% to 5.65% compared to cases with Na doping under the same conditions (Comparative example 1 versus Examples 1 to 4), and the initial efficiency is reduced by 1.2% to 3.5% compared to cases with Na doping under the same conditions.

As shown in Comparative example 2, doping an excessive amount of Na in a lithium-sodium composite manganese-based material results in defects such as reduced first discharge specific capacity, decreased cycling performance, and increased gas evolution.

Comparative example 3 shows that an excessively low Co content in a lithium-sodium composite manganese-based material leads to a reduced first discharge specific capacity of the positive electrode.

Comparative examples 4 and 5 show that doping excessive amounts of M or A in a lithium-sodium composite manganese-based material reduces the first discharge specific capacity and initial efficiency of the positive electrode.

Comparative example 6 further shows that inappropriate Li and Na contents in a lithium-sodium composite manganese-based material not only significantly reduce the cycling performance of the positive electrode and markedly increase gas evolution but also decrease the first charge-discharge specific capacity and initial efficiency of the positive electrode.

Therefore, in the embodiments of the present application, by doping appropriate amounts of Na, M, and A into a lithium-sodium composite manganese-based material, LiₜNa_{y}[LiₓNiₐCo_{b}Mn_{c}M_{d}]AₚO_{q} is satisfied, where 0<y<0.2, 0.68≤t+y≤1, x+a+b+c+d=1, x>0, a≥0.2, 0<b<0.1, c≥0.4, 0<d<0.04, 0≤p≤0.1, 0≤q≤2, enabling a positive electrode using this lithium-sodium composite manganese-based material as an active material to simultaneously achieve high discharge specific capacity and initial efficiency, excellent cycling performance, low gas evolution, and very good overall performance.

It should be noted that the above embodiments are only used to illustrate the technical solutions of the present application and are not intended to limit it. Although the present application has been described in detail with reference to the foregoing embodiments, those of ordinary skill in the art should understand that modifications can still be made to the technical solutions described in the foregoing embodiments, or equivalent substitutions can be made to some or all of the technical features. Such modifications or substitutions do not cause the essence of the corresponding technical solutions to depart from the scope of the technical solutions of the embodiments of the present application, and they should be included within the scope of the claims and specification of the present application. In particular, as long as there is no structural conflict, the technical features mentioned in each embodiment can be combined in any manner. This application is not limited to the specific embodiments disclosed in this specification but includes all technical solutions falling within the scope of the claims.

## Claims

1. A lithium-sodium composite manganese-based material, **characterized in that** the lithium-sodium composite manganese-based material comprises LiₜNa_{y}[LiₓNiₐCo_{b}Mn_{c}M_{d}]AₚO_{q}, wherein 0<y≤0.2, 0.68≤t+y≤1, x+a+b+c+d=1, x>0, a≥0.17, 0≤b<0.1, c≥0.4, 0≤d<0.04, 0≤p≤0.1, 0<q≤2; M comprises one or more of V, Nb, Ta, Cr, Mo, B, Al, Ti, Zr, Mg, Ce, Fe, W, or Sn; and A comprises one or more of F, S, N, or Cl.

2. The lithium-sodium composite manganese-based material according to claim 1, **characterized in that** 0<y≤0.1;
and/or, (t+x)/(a+b+c)=0.9-1.4, optionally (t+x)/(a+b+c)=1.3-1.4.

3. The lithium-sodium composite manganese-based material according to claim 1 or 2, **characterized in that** a mass percentage of Na element in the lithium-sodium composite manganese-based material is less than or equal to 6%; optionally greater than or equal to 0.3% and less than or equal to 2%.

4. The lithium-sodium composite manganese-based material according to any one of claims 1 to 3, **characterized in that** a specific surface area of the lithium-sodium composite manganese-based material is 0.3-12 m²/g; optionally 0.4-10 m²/g; optionally 0.5-5.5 m²/g.

5. The lithium-sodium composite manganese-based material according to any one of claims 1 to 4, **characterized in that** a mass fraction of alkaline substances in the lithium-sodium composite manganese-based material is 250-3000 ppm; optionally 300-3000 ppm; optionally 300-2000 ppm.

6. The lithium-sodium composite manganese-based material according to any one of claims 1 to 5, **characterized in that** an X-ray diffraction pattern of the lithium-sodium composite manganese-based material comprises a (101) crystal plane diffraction peak at a 2θ angle of 36.5±0.5° and a (102) crystal plane diffraction peak at a 2θ angle of 38.4±0.5°, wherein the (101) crystal plane diffraction peak and the (102) crystal plane diffraction peak satisfy: (I₁₀₁/I₁₀₂)^{0.5}≥1.96, wherein I₁₀₁ represents a peak area of the (101) crystal plane diffraction peak, and I₁₀₂ represents a peak area of the (102) crystal plane diffraction peak; optionally, (I₁₀₁/I₁₀₂)^{0.5}≥2.

7. The lithium-sodium composite manganese-based material according to any one of claims 1 to 6, **characterized in that** an X-ray diffraction pattern of the lithium-sodium composite manganese-based material comprises a (002) crystal plane diffraction peak at a 2θ angle of 16.0±0.8° and a (003) crystal plane diffraction peak at a 2θ angle of 18.6±0.6°, wherein the (002) crystal plane diffraction peak and the (003) crystal plane diffraction peak satisfy: 0≤(I₀₀₂/I₀₀₃)≤0.4, wherein I₀₀₂ represents a peak area of the (002) crystal plane diffraction peak, and I₀₀₃ represents a peak area of the (003) crystal plane diffraction peak; optionally, 0.01≤(I₀₀₂/I₀₀₃)≤0.4.

8. The lithium-sodium composite manganese-based material according to any one of claims 1 to 7, **characterized in that** a median particle size Dv50 of the lithium-sodium composite manganese-based material is 2-15 µm; optionally 3-10 µm.

9. The lithium-sodium composite manganese-based material according to any one of claims 1 to 8, **characterized in that** a range of a particle size distribution span SPAN=[(Dv90-Dv10)/Dv50] of the lithium-sodium composite manganese-based material is 0.5≤SPAN≤2; optionally, 0.5≤SPAN≤1.8; and optionally, 0.8≤SPAN≤1.4.

10. A method for preparing a lithium-sodium composite manganese-based material, **characterized by** comprising:
mixing raw materials and performing a first sintering treatment to obtain a lithium-sodium composite manganese-based material; wherein the raw materials comprise a lithium source, a sodium source, a nickel source, and a manganese source, and optionally further comprise a cobalt source, an M source, and an A source;
wherein the lithium-sodium composite manganese-based material comprises LiₜNa_{y}[LiₓNiₐCo_{b}Mn_{c}M_{d}]AₚO_{q}, 0<y≤0.2, 0.68≤t+y≤1, x+a+b+c+d=1, x>0, a≥0.17, 0≤b<0.1, c≥0.4, 0≤d<0.04, 0≤p≤0.1, 0<q≤2; M comprises one or more of V, Nb, Ta, Cr, Mo, B, Al, Ti, Zr, Mg, Ce, Fe, W, or Sn, and A comprises one or more of F, S, N, or Cl.

11. The method for preparing a lithium-sodium composite manganese-based material according to claim 10, **characterized in that** conditions of the first sintering treatment comprise one or more of the following (1) to (4):
(1). A temperature range of 700-1100°C of the first sintering treatment, optionally 750-1000°C, optionally 780-990°C;
(2). Heating to a temperature of the first sintering treatment at a rate of 2-10°C/min, wherein optionally, the rate is 2-5°C/min;
(3). Holding at the temperature of the first sintering treatment for 10-20 h, optionally 10-15 h;
(4). An oxygen-containing atmosphere, wherein optionally, a volume percentage of oxygen in the oxygen-containing atmosphere is 20%-99.99%.

12. The method for preparing a lithium-sodium composite manganese-based material according to claim 10 or 11, **characterized in that** the preparation method further comprises a washing treatment step for a product of the first sintering treatment;
optionally, the washing treatment step comprises: washing the product of the first sintering treatment with a washing liquid;
optionally, a pH range of the washing liquid is 1.5-7, optionally 2-7, optionally 2.5-7;
optionally, a solid-liquid ratio of the product of the first sintering treatment to the washing liquid is 1/35-1/6 g/mL, optionally 1/20-1/10 g/mL;
optionally, a duration of the washing treatment is 0.2-10 h, optionally 0.25-4 h;
optionally, the washing treatment comprises a stirring step, wherein a stirring rate is 800-1200 r/min, optionally 900-1000 r/min;
optionally, the washing liquid comprises water and one or more acid solutions; optionally, the acid solution comprises a solution of any one or more of hydrochloric acid, sulfuric acid, nitric acid, acetic acid, citric acid, ammonium citrate, phosphoric acid, ammonium chloride, or ammonium sulfate.

13. The method for preparing a lithium-sodium composite manganese-based material according to any one of claims 10 to 12, **characterized in that** the preparation method further comprises a second sintering treatment step for the product of the first sintering treatment;
optionally, conditions of the second sintering treatment comprise one or more of the following (i) to (iv):
(i). A temperature range of 300-700°C of the second sintering treatment, optionally 300-600°C, optionally 400-550°C;
(ii). Heating to a temperature of the second sintering treatment at a rate of 2-10°C/min, wherein optionally the rate is 2-5°C/min;
(iii). Holding at the temperature of the second sintering treatment for 5-20 h, optionally 8-12 h;
(iv). An oxygen-containing atmosphere, wherein optionally, a volume percentage of oxygen in the oxygen-containing atmosphere is 20%-99.99%.

14. A positive electrode plate, **characterized in that** the positive electrode plate comprises the lithium-sodium composite manganese-based material according to any one of claims 1 to 9, or comprises a lithium-sodium composite manganese-based material prepared by the method according to any one of claims 10 to 13.

15. A secondary battery, **characterized in that** the secondary battery comprises the positive electrode plate according to claim 14.

16. An electric apparatus, **characterized in that** the electric apparatus comprises the secondary battery according to claim 15.
